# EUROPÄISCHE PATENTSCHRIFT

(11) **EP 0 553 323 B1**
(45) Veröffentlichungstag und Bekanntmachung des Hinweises auf die Patenterteilung: **07.01.1998**
(21) Anmeldenummer: 92916932.4
(22) Anmeldetag: 20.08.1992
(51) Int. Cl.: A21C 11/16, F26B 21/02, F26B 15/12

(54) **VERFAHREN UND VORRICHTUNG ZUM PRESSEN UND TROCKNEN VON TEIGWAREN**
PROCESS AND DEVICE FOR PRESS-MOULDING AND DRYING DOUGH PRODUCTS
PROCEDE ET DISPOSITIF DE MOULAGE PAR COMPRESSION ET DE SECHAGE DE PATES ALIMENTAIRES

(30) Priorität: 21.08.1991 CH 2454/91
(43) Veröffentlichungstag der Anmeldung: 04.08.1993
(73) Patentinhaber: Bühler AG, 9240 Uzwil (CH)
(72) Erfinder: MANSER, Josef, CH-9240 Uzwil (CH); EGGER, Friedrich, CH-9244 Niederuzwil (CH); SEILER, Werner, CH-9523 Züberwangen (CH); RESCH, Heinz, CH-9230 Flawil (CH)
(86) Internationale Anmeldenummer: CH9200166
(87) Internationale Veröffentlichungsnummer: WO9303620

(56) Entgegenhaltungen:
- EP-A- 0 066 661
- EP-A- 0 086 246
- WO-A-85/00090
- CH-A- 347 483
- CH-A- 615 269
- FR-A- 2 506 917
- FR-A- 2 523 707
- GB-A- 2 043 424
- GB-A- 2 043 860
- US-A- 4 126 706
- US-A- 4 126 945

## Beschreibung

Die Erfindung betrifft ein Verfahren und eine Teigwarenlinie zur Herstellung von Teigwaren durch Formpressen über eine Form und anschliessendem Trocknen in einem kontinuierlichen Durchlauftrockner gemäss des Oberbegriffes von Anspruch 1 bzw. von Anspruch 9.

Grundsätzlich unterscheidet man zwischen Verfahren und Vorrichtungen zur Herstellung von sogenannten Langwaren, wie beispielsweise Spaghetti und Verfahren und Vorrichtungen zur Herstellung von sogenannten Kurzwaren, wie beispielsweise Hörnchen oder andere so kurz geschnittene Teigwaren, dass sie im weiteren Verfahren als Schüttgüter behandelt werden können.

Das Produzieren von Langwaren, d.h. Spaghetti, geschieht bis heute industriell, indem die von der Form kontinuierlich angelieferten Teigwarenfäden von einem Stab übernommen, an diesem Stab bei einer vorgegebenen Länge geschnitten und an diesen Stäben in einen Trockner geführt werden. Anschliessend an den Trockner werden die Teigwarenfäden in die gewünschte Länge der Spaghetti geschnitten.

Kurzwaren werden in an sich bekannter Weise mit einem entsprechenden mechanischen Aufwand an Aufnahme- und Transportelementen und Ueberhebungen durch die Trocknung geführt mit dem Vorteil gegenüber den Langwaren, z.B. Spaghetti, dass diese Kurzwaren bereits an der Pressform auf ihre Länge geschnitten werden können.

Die bisher bekannte Herstellung von Langteigwaren ist in der WO-A-850090 beschrieben. Die aus einer Pressform kommenden Teigwaren werden in die geeignete Länge geschnitten und hängend durch den Trockner geleitet. Nach dem Trocknen werden die U-förmigen getrockneten Langwarenstäbe für die Verpackung zurechtgeschnitten.

In der US-A-4,126,945 ist ein Verfahren und eine Vorrichtung zur Herstellung von Teigwaren, insbesondere Kurzwaren, beschrieben. Das Verfahren und die Vorrichtung sieht einen Wirbelkanal mit einem luftdurchlässigen Boden mit einer Eintritts- und einer Austrittsöffnung vor. Die Luftleitung ist als Umluftkanal ausgebildet, wobei zusätzlich im Umlaufkanal ein Luftpulsator angeordnet ist.

Die EP-A 0 086 246 beschreibt ebenfalls ein Verfahren und eine Vorrichtung zur Herstellung von Teigwaren. Das Verfahren besteht darin, eine breite Flächenbahn von Rohteig in schmale Streifen in Längsrichtung zu schneiden, anschliessend einer Dampfbehandlung zu unterziehen, in Gebrauchslänge zu schneiden und dann zu trocknen.

In der GB-A-2 043 424 ist ein weiteres Verfahren zur Herstellung von Teigwaren offenbart. Das Verfahren zeichnet sich durch fünf Hauptschritte aus:
I.Mischen und Kneten des Teiges;
II.Formen der Nudeln;
III.Befeuchten der Teigwaren
IV.Vortrocknen mittels Luft und
V.Schneiden und letztes Trocknen.

Es stellt sich die Aufgabe, ein Verfahren und eine Teigwarenlinie vorzuschlagen, die die Herstellung sowohl von Langteigwaren als auch von Kurzteigwaren ermöglicht unter Einsparung von bisher notwendigen Einrichtungen. Darüberhinaus soll der Energiehaushalt optimiert werden. Diese Aufgabe wird erfindungsgemäss durch die Kennzeichen der Ansprüche 1 und 9 gelöst.

Weitere vorteilhafte Ausführungsformen sind in den abhängigen Ansprüchen aufgeführt.

Grundsätzlich sind aufwendige und eventuell auch komplizierte technische Lösungen, welche andererseits räumlich kompakt und von dieser Seite gesehen interessant sind, für eine grossvolumige industrielle Fabrikation gerechtfertigt, jedoch im Rahmen und Gedanken einer Dezentralisation der Fabrikation von Nahrungsmitteln und einer damit zusammenhängenden Reduktion der Herstellungsleistung unter Umständen zu kompliziert und zu teuer.

Die Tendenz in den letzten Dekaden der technischen Entwicklung führten in Richtung Gigantismus mit all den ökologischen, heute erkennbaren Nachteilen, weshalb in einem Umdenken wieder vom Gigantismus in die Zielrichtung Kleinbetriebe an Ort und Stelle gestrebt wird, um die Vertriebsorganisation mit all ihren Transportproblemen und ökologischen Belastungen entsprechend ebenfalls reduzieren zu können.

Auch aus diesen Ueberlegungen hat sich der Erfinder die vorher erwähnte Aufgabe gestellt.

Bei rein physikalischer Betrachtung können Teigwaren, z.B. innerhalb einer halben Stunde getrocknet werden.

Ein erster grösserer Durchbruch gelang der Anmelderin mit dem Gedanken der völligen Kontrolle einer abschnittsweise Steuerung des Trocknungsklimas, bei gleichzeitiger Anwendung einer Trocknungstemperatur von 80°C bis 100°C für Langwaren, wobei die Trocknungszeit auf zwei bis 6 Stunden, zumindest im Laborversuch bis sogar auf eine Stunde, gesenkt werden konnte. Alle Erfahrungen bestätigten jedoch, dass die Trocknungstechnik für Langwaren nicht nur mehr Schwierigkeiten verursacht, sondern auch spezielle Rahmenbedingungen verlangt. Konnte sich doch im Markt nur die Methode der Trocknung der langen Teigwaren auf Stäben durchsetzen. Konzepte für stablose Trocknung für Langwaren haben sich aus technischen Gründen in der Praxis nicht durchgesetzt. Grundsätzlich müssen die technischen Mittel sich an die Erfordernisse der biologischen und biochemischen und physikalischen Gesetzmässigkeiten des zu verarbeitenden Gutes anpassen.

Ein Ziel der Teigwarentrocknung ist nicht nur die innere Qualität der Ware, etwa Kocheigenschaften, Bissqualität (z.B. al dente) oder Farbe, Bruchfestigkeit usw., sondern ganz besonders auch die Erhaltung einer möglichst geraden Form einer einzelnen Langware, besonders der Spaghetti. Das letztere weniger, weil der Konsument dies verlangt, sondern als eine Grundvoraussetzung für eine störungsfreie Funktion der automatischen Verpackungsmaschinen.

Direkt nach dem Verpressen ist die Ware leicht biegsam und noch verformbar, kann deshalb noch mit einfachen Mitteln in der Bekannten U-Form auf Stäben aufgehängt und in dieser Lage bis zur Endtrocknung belassen werden. Auf diese Weise erhält man, wenn keine groben Fehler in der Trocknung gemacht werden, lange und gerade Teigwaren.

An sich ist das Problem der Langwarentrocknung auf Stäben technisch gelöst.

Ein Problem entstand bei einer Erhöhung der Trocknungstemperatur, indem wesentlich grössere Ansprüche an die Werkstoffe der Betriebseinrichtung, sowie der Mechanik, insbesondere an die mechanisch bewegten Teile gestellt werden mussten, was die Kosten der Herstellung einer ganzen Teigwarenlinie erhöhte.

Eine Besonderheit hat sich bisher für kurze Teigwaren bzw. Kurzwaren eingebürgert.

Kurzwaren werden über eine kreisflächige Form gepresst und mit einem kreisenden Messer direkt an der Form auf die gewünschte Verpackungslänge geschnitten. Nach dem Schnitt fallen die Kurzwaren meistens in einen Förderer, der sie überhebt, einem Drehverteiler zuspeist, welcher die Ware auf einen Schüttelvortrockner in eine gleichmässige Schüttschicht auf der Trocknungsfläche ausbreitet.

Nach dem Schüttelvortrockner haben die Kurzwaren schon eine beachtliche Formfestigkeit, so dass diese mit grösserer Schichtdicke auf verschiedenartigen Trockenbändern bis unter 13% Warenfeuchtigkeit getrocknet werden.

Langwaren werden demgegenüber nicht direkt an der Form, sondern erst nachdem die Teigfäden in der typischen U-Form auf den Stäben hängen, je nach spezifischer Konstruktion in etwa 0,5 bis 1,5m Distanz von der Pressform geschnitten, so dass ein ständiges Wechselspiel, Behängen-Schneiden usw. entsteht. Die Ware bleibt dann auf den Stäben; häufig bis unmittelbar vor dem definitiven Schnitt an der trocknen Ware für die Verpackungslänge. Die Teigwaren bleiben besonders für eine gute Stabilisierung viele Stunden auf den Stäben in einem Stapler. Die äussere Form scheint geradezu zu diesen besonderen Trocknungstechniken zu zwingen. Bisher war es unvorstellbar, die Trocknung von Langwaren als Schüttschicht durchzuführen.

Die neue Erfindung erlaubt eine ganze Anzahl besonders vorteilhafter Ausgestaltungen. So können z.B. die Teigwaren unmittelbar nach der definitiven Formgebung in ein, über Steuermittel kontrolliertes Klima geführt werden, wobei die Temperatur der Ware von der Presstemperatur auf über 70°C, vorzugsweise auf über 80°C, erwärmt wird.

Dabei werden die Langwaren nach einer Vortrocknung als heisser Strang bei wenigstens 70°C entweder in Trocknungslängen, oder in Fertigwarenlängen geschnitten und warmem Zustand in einen, an sich bekannten, Massentrocknungsverfahren getrocknet bzw. in die Haupttrocknung geführt.

Besonders bevorzugt werden die Teigstränge für Langwaren bis zu einer genügenden Formfestigkeit auf unter 28%, vorzugsweise auf unter 25% Feuchtigkeit getrocknet, feucht geschnitten, und anschliessend die geschnittene Ware z.B. portionenweise auf unter 13% Produktfeuchtigkeit fertiggetrocknet.

Es ist vorteilhaft, wenn die Trocknung abwechselnd Heizabschnitte und Trocknungsabschnitte aufweist, wobei die Heizung der Teigwaren mit Heissluft oder durch Mikrowellenenergie erfolgen kann, mit je anschliessender intensiver Trocknung der Teigstränge.

Bei einer weiteren vorteilhaften Ausführungsform wird die Teigware am Ende der Trocknung durch Mikrowellen stabilisiert.

Ganz besonders wichtig aber ist, dass die Trocknung in einer grösseren Zahl Trocknungsstufen erfolgt. Jede Stufe soll eine eigene steuerbare Klimaführung, sowie ein eigenes Umluftsystem aufweisen, wobei vorgeschlagen wird, die Vortrocknung der Teigware bei einer Warentemperatur von über 70°C und bis zu 80°C durchzuführen.

Testversuche haben bestätigt, dass die Haupttrocknung der Teigwaren mit Temperaturen von 80°C bis 150°C besonders bevorzugt mit 90°C bis 125°C erfolgen kann.

Eine leichte Steigerung der Temperatur auf über 100°C kann je nach Qualität bei einer Warenfeuchtigkeit von unter 18%, vor allem aber unter 15% ohne schädliche Nebenwirkung auf die Qualität, insbesondere ohne irgendeinen Puff-Effekt erfolgen. Dadurch wird es aber erstmals möglich, den anfänglich sehr raschen Trocknungseffekt bis zu der Endtrocknung aufrecht zu erhalten, und somit die Trocknungszeit auf bisher nicht bekannte kurze Zeitdauer zu reduzieren.

Die Wärme kann mittels Mikrowellen und/oder Heissluft und/oder Heissdampf in die Ware gebracht werden.

Bei einer weiteren Ausgestaltung wird während der Endtrocknung die Warentemperatur gestuft auf weniger als 60°C gesenkt, dabei kann die in der Ware gespeicherte Wärme zur Zustandsänderung des Wassers in die Dampfform und damit zur beschleunigten Trocknung ausgenützt werden.

Besonders beim Einsatz von Mikrowellen zur Wärmung der Teigstränge ist es möglich, mit einer Trocknungstemperatur der Luft, die wesentlich tiefer liegen kann, zu arbeiten, da dann mit der Wärmeabfuhr auch das Wasser in Dampfform leicht wegführbar ist.

Bevorzugt werden die Teigstränge (für Langwaren) bis zum Schnitt völlig gerade und horizontal und die Trocknungsluft vertikal quer zu den Teigsträngen geführt, wobei die Luftgeschwindigkeit vorzugsweise steuerbar ist, derart, dass sich eine Fluidisierung der Teigstränge einstellt.

Gemäss einem weiteren Ausgestaltungsgedanken werden im Trocknungsbereich die Teigstränge wenigstens über ein erstes Wareneinzugsmittel sowie eine Warenaustragshilfe gelenkt, wobei die Wareneinzugsmittel stoss- und zugfrei und die Warenaustragsmittel eine leichte Zugkraft auf die Teigstränge ausüben. Damit keine Rückstosskraft auf die Teigstränge erzeugt wird, soll die Längenschneideinrichtung während dem Schnitt sich mit den Geschwindigkeiten der Teigstränge bewegen.

Die Erfindung erlaubt eine ganze Anzahl vorteilhafter Ausgestaltungen. Bevorzugt werden die Teigwaren unmittelbar nach der definitiven Formgebung in ein, über Steuermittel kontrolliertes, Klima geführt, und die Temperatur der Ware von der Presstemperatur auf über 70°C, vorzugsweise auf über 80°C erwärmt.

Für die industrielle Fertigung ist es besonders vorteilhaft, wenn die definitive Formgebung derart erfolgt, dass ein horizontal bewegter Strang gebildet wird, der unmittelbar in ein Aufheiz- und Trocknungsklima geführt wird. Es kann so vermieden werden, dass auf dem relativ kalt-starren Teigstrang gleich nach der Verpressung Durchbiegekräfte einwirken. Dadurch wird es nun aber auch möglich, viel längere Schenkel, z.B. im Falle einer Stab-Haupttrocknung vorzusehen, wodurch der ganze Trockner verkürzt und im Sinne eines Durchlaufofens in einer einzigen Etage konzipiert sein kann.

Die Teigstränge können gemäss einer anderen Ausgestaltung in noch feuchtem Zustand geschnitten und anschliessend portionenweise getrocknet werden. Bei einer weiteren Ausführungsform werden die Teigstränge schnittfrei und gerade bis zur Formfestigkeit getrocknet, in die Verpackungslänge geschnitten, in Portionen fertiggetrocknet und die Ware in Schachtsilos stabilisiert und bis zur Verpackung gelagert.

Gemäss einem weiteren Ausgestaltungsgedanken werden die Teigwaren horizontal und die Trocknungsluft vertikal quer zu den Teigwaren geführt, wobei die Luftgeschwindigkeit vorzugsweise so hoch gewählt ist, dass sich eine Fluidisierung der Teigwaren einstellt, wobei die Teigwaren über ein Stetigfördermittel, vorzugsweise ein luftdurchlässiges Endlosförderband oder luftdurchlässige Vibrotransporteinheiten geführt werden.

Bei einer weiteren, ganz besonders vorteilhaften Ausgestaltung wird an der Pressform eine Teigstrangschneideinrichtung angeordnet, welche Schneidmesser mit Längsschneidrichtungen zu der Pressform aufweist.

Der Durchlauftrockner kann zwei- oder mehrlagig ausgebildet werden.

Ganz besonders vorteilhaft wird der Trockner so konzipiert, dass er eine grosse Zahl Trocknungsabschnitte mit einzelnen steuerbaren Klimatas aufweist, sowie einer Umluftführung, bevorzugt mit Turbo-Thermatik-System.

Eine weitere interessante Ausbildung liegt darin, dass das Durchlauffördersystem zumindest teilweise mit Vibro-Transporteinheiten gebildet ist, welche vorzugsweise Längsschotten zur Längsführung der Teigwarenstränge aufweisen.

Im weiteren gestattet die neue Erfindung denn auch überraschenderweise eine ganze Reihe von besonderen Ausgestaltungen. Vorzugsweise wird die Schneideinrichtung mit einer Steuereinrichtung derart ausgebildet, dass Schneidintervalle steuerbar sind.

So kann z.B. für die Trocknung von Teigsträngen die Schneideinrichtung für den Anfangs- sowie für den Endschnitt verwendet werden.

Bei Kurzwaren muss das Schneidintervall entsprechend der Austrittsgeschwindigkeit der Ware aus der Form sowie der gewünschten Länge der Ware gewählt werden.

Ferner kann die Schneideinrichtung als Querschneideinrichtung, bzw. als Doppelschneideinrichtung ausgebildet werden. Damit kann mit extrem grosser Geschwindigkeit ein linearer Schnitt erzielt werden.

Es wird ferner vorgeschlagen, dass die Länge der Pressform etwa der nutzbaren Breitenabmessung des Vibrotrockners entspricht, wobei unterhalb der Pressform Wareneinzugsmittel angeordnet sind, zur direkten Einführung der Ware in den Durchlauftrockner.

Der Durchlauftrockner kann in Durchlaufrichtung zwei oder mehrere Wirbelschichten aufweisen, welche vorzugsweise als Vibrotansporteinheit ausgebildet sein können. Dabei wird der Durchlauftrockner in eine grössere Anzahl Klimazonen mit je einem eigenen Umluftsystem aufgeteilt.

Bei einer weiteren bevorzugten Ausführungsform wird der Durchlauftrockner mehrlagig ausgebildet.

Es ist ferner für Kurzwaren möglich, als Endtrockner einen an sich bekannten Trommeltrockner zu wählen, und diesen dem Durchlauftrockner nachzuschalten.

Ferner kann bei einer weiteren ganz besonders vorteilhaften Ausgestaltung in dem Bereich des Endtrockners eine Längenschneidmaschine vorgesehen werden, für das Sägen von langen Teigwaren in die gewünschte Verpackungslänge. Hierzu wird baulich die Teigwarenlinie entsprechend der CH-Anmeldung Nr. CH 02292/91-8 (TW 108) konzipiert, worauf vollumfänglich Bezug genommen wird.

Vor der Längenschneidmaschine kann ferner eine Austragvorrichtung angeordnet werden, damit die Kurzwaren, die direkt an der Form geschnitten werden, vor dem Passieren der Längenschneidmaschine aus der Linie ausgetragen werden.

Die neue Erfindung betrifft ferner ein Verfahren zur Herstellung von Teigwaren, wobei die Teigwaren mit einer Teigfeuchtigkeit von etwa 28% bis 35% verpresst, getrocknet und auf die gewünschte Verpackungslänge geschnitten werden. Dabei können die Teigwaren durch eine Langform verpresst und einer Durchlaufwirbelschicht getrocknet werden.

Ueberraschenderweise ergibt sich ein echter kombinatorischer Effekt zwischen Langform und Durchlaufwirbelschicht, indem die Austrittsgeschwindigkeit der Ware an der Form direkt die Durchlaufgeschwindigkeit durch die Wirbelschicht in günstigem Sinne beeinflussen.

Bei Kurzwaren entsteht durch die breite Aufschüttung ein Verteileffekt auf der Wirbelschicht und somit ein automatischer Ausgleich bei Durchsatzänderungen.

Bei einer weiteren bevorzugten Ausgestaltung werden die Teigwaren über eine, eine Längsschneideinrichtung aufweisende Langform gepresst, als Schüttschicht in einem Tunneltrockner getrocknet und als Kurzwaren ausgetragen oder als Langwaren über eine Längenschneideinrichtung in gewünschte Verpackungslängen geschnitten.

Dabei ist es für Kurzwaren möglich, dass die Trocknung der Ware bis zur Formfestigkeit auf weniger als etwa 20% in dem Durchlauftrockner erfolgt. Die Endtrocknung kann dann in einer Trommeltrocknung erfolgen.

Bevorzugt wird die Anfangstrocknung bei einer Warentemperatur von 80°C bis 100°C und die Endtrocknung vorzugsweise bei 100°C bis 150°C, besonders bevorzugt bei 100°C bis 125°C durchgeführt.

Wie bereits angetönt, liegt der Vorteil der Erfindung in der Möglichkeit, durch die Vereinfachung der Mechanik, Teigwaren mit unterschiedlichen Formen mit in wesentlichen derselben Anlage durchzuführen.

Die Erfindung wird nun anhand einiger Ausführungsbeispiele mit weiteren Einzelheiten erläutert.

Es zeigt:
- Fig. 1: eine stablose Langwarenlinie;
- Fig. 2: eine Langwarenlinie mit zwei Etagen;
- Fig. 3: ein weiteres Ausführungsbeispiel einer erfindungsgemässen einetagigen Teigwarenlinie;
- Fig. 4: ein weiteres Ausführungsbeispiel einer erfindungsgemässen zweitetagigen Teigwarenlinie;
- Fig. 5: eine Teigwarenlinie mit Presse, Trockner, Langwarenstapler, sowie Verpackungsmaschine;
- Fig. 6: eine Teigwarenlinie für Kurzwaren mit einem Trommeltrockner als Endtrockner;
- Fig. 7: eine Pressform als Langform für Kurzwaren mit einer anschliessenden Trocknungslinie, halbschematisch dargestellt;
- Fig. 8: eine Pressform als Langform für Langwaren mit einer anschliessenden Trocknungslinie, halbschematisch dargestellt;
- Fig. 9: ein Längsausschnitt aus einer erfindungsgemässen Trocknungslinie, vergrössert und halbschematisch dargestellt;
- Fig. 10: ein Querschnitt durch die Trocknungslinie der Fig. 9, vergrössert und halbschematisch dargestellt;
- Fig. 11: eine schematische Darstellung der Luftwege einer Trocknungslinie mit einem Querschnitt der Trocknungslinie analog Fig. 10, schematisch dargestellt.
- Fig. 12: eine Langform mit einer Längsschneideinrichtung, halbschematisch und im Querschnitt dargestellt;
- Fig. 13: die Langform von Fig. 12 in Draufsicht gemäss Pfeil I (Fig. 12) dargestellt;
- Fig. 14: eine Variante der Langform von Fig. 12;
- Fig. 15: eine Draufsicht gemäss Pfeil II der Fig. 14;
- Fig. 16: eine weitere Variante einer erfindungsgemässen Langform analog Fig. 12
- Fig. 17: ein Betriebszustand der Vorrichtung von Fig. 16;
- Fig. 18: eine Variante einer erfindungsgemässen Schneidvorrichtung für eine Langform ähnlich Fig. 12, halbschematisch dargestellt;
- Fig. 19: eine weitere erfindungsgemässe Schneidvorrichtung mit einer Langform gemäss Fig. 12;
- Fig. 20: eine Variante der Schneidvorrichtung von Fig. 13;
- Fig. 21: eine erfindungsgemässe Schneidvorrichtung für eine Langform gemäss Fig. 12, halbschematisch dargestellt;
- Fig. 22: die Schneidvorrichtung von Fig. 21 in Blickrich tung III (Fig. 21) dargestellt;
- Fig. 22.1: ein Detail der Schneidvorrichtung der Fig. 21 und 22.

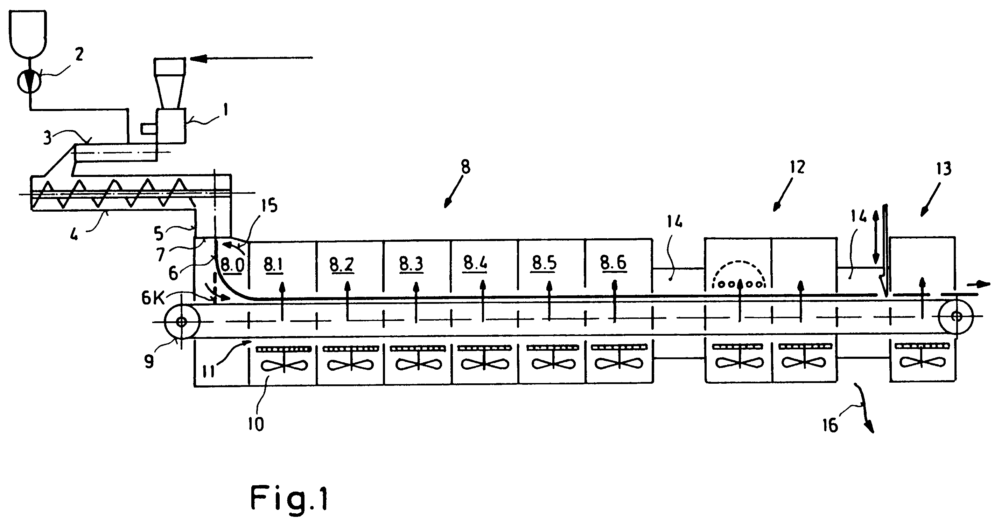

In der Folge wird nun auf Fig. 1 Bezug genommen. Das Rohmaterial wird als trockene Komponente über eine Dosierung 1 und die als Flüssigkeitskomponente über eine Flüssigdosierung 2, einer Kneteinrichtung 3 sowie einer Pressschnecke 4 und einem Presskopf 5 zugeführt, von welchem Teigstränge 6 oder Kurzwaren 6K durch eine Pressform 7 gebildet und direkt durch einen Trockner 8 geleitet werden.

In dem Trockner führt ein Fördersystem 9 die Teigstränge kontinuierlich durch eine vorgegebene Anzahl Trocknungsabschnitte 8.1, 8.2 usw.

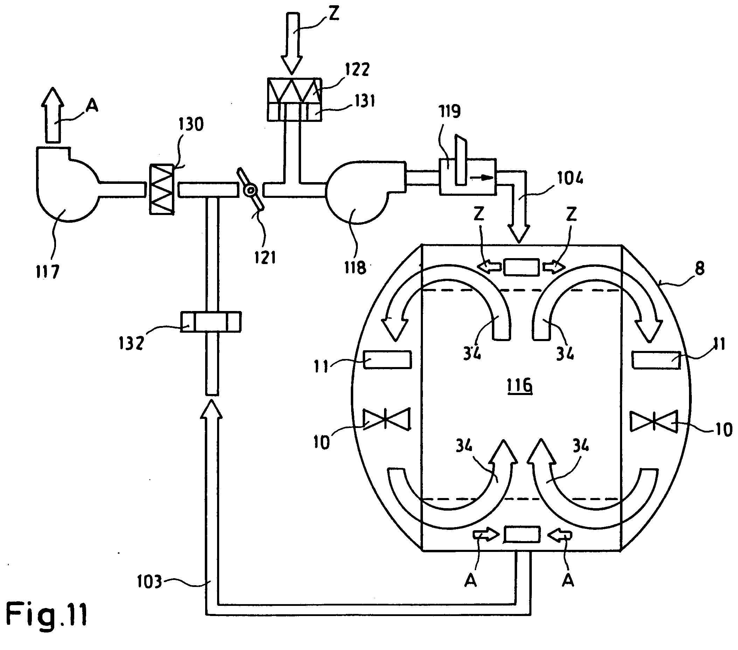

Jeder Trocknungsabschnitt weist eine später mit Fig. 11 beschriebene Luftführung, zur Gewährleistung der Klimaführung und der Klimakontrolle auf, was in dieser Figur mit einem Ventilatorrad 10, sowie mit einem Heizelement 11 symbolisch angedeutet ist.

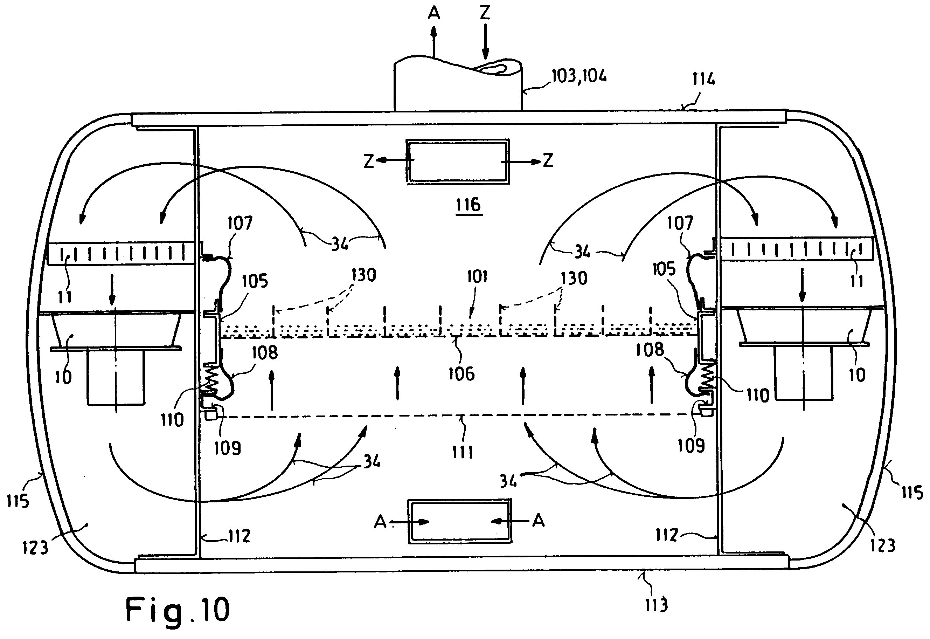

Das Fördersystem 9 kann ein perforiertes Endlosband (nicht dargestellt) oder ein später mittels Fig. 10 beschriebener Vibroförderer sein. In beiden Fällen wird vorteilhafterweise ein mit den Fig. 10 und 11 gezeigte Luftdurchströmung vorgesehen, welche im wesentlichen senkrecht durch das Endlosband resp. durch den Vibroförderer strömt.

Anschliessend an den Trockner 8, ist ein Stabilisator 12 angeordnet.

Wird der Stabilisator 12 als Mikrowellenstabilisator ausgebildet, so wird zwischen Trockner 8 und Stabilisator 12 sowie zwischen Stabilisator 12 und einer Längenschneideinrichtung 13, je eine Schleuse 14 vorgesehen, welche als Mikrowellenschleuse ausgebildet ist. Dabei ist die vorgenannte Längenschneideeinrichtung 13 anschliessend an die zweite Schleuse 14, in Förderrichtung des Produktes gesehen, angeordnet.

Mit der Bezugsziffer 15, resp. dem damit bezeichneten Pfeil 15, ist eine später beschriebene Schneideinrichtung an der Pressform 7 für kurze oder lange Teigwaren bezeichnet. Mit einer solchen Schneideinrichtung können einerseits zu Beginn die fehlerhaft extrudierte Ware beschnitten, oder am Ende einer Chargenproduktion die Teigstränge auf ein einheitliches Ende, oder es können Teigwaren von irgendwelcher Länge geschnitten werden.

Der Pfeil 16 deutet an, dass mit derselben Linie, Kurzwaren und Langwaren herstellbar sind, wobei die Kurzwaren mit der Querschneideeinrichtung 15 geschnitten werden und gemäss Pfeil 16 vor der Längenschneideinrichtung 13 ausgetragen werden.

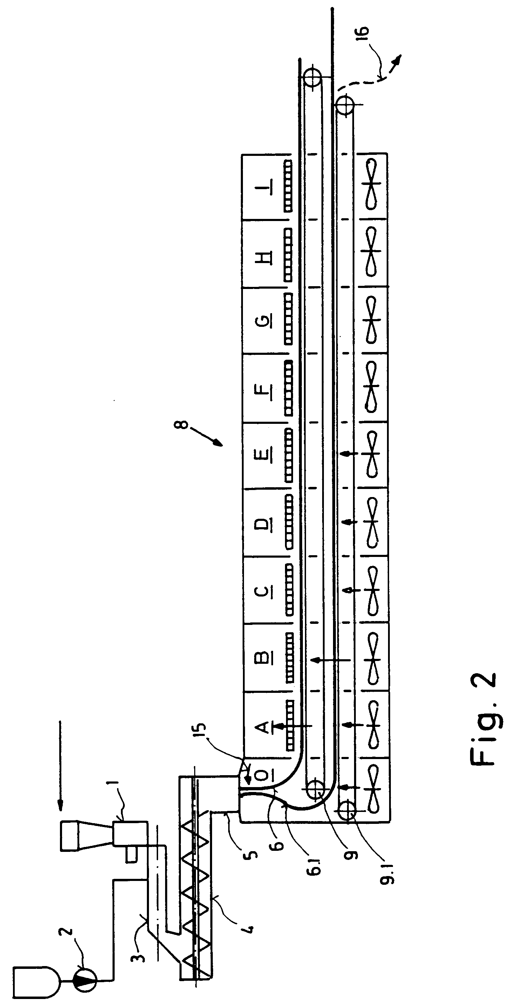

Die Fig. 2 kann analog zur Fig. 1 konzipiert sein, stellt jedoch eine zweietagige Ausführung dar, mit einem oberen Fördersystem 9, sowie einem unteren Fördersystem 9.1, auf welchem je die Teilstränge 6 resp. 6.1 durch den Trockner geführt werden.

Die Fig. 2 lässt sich aber auch derart ausgestalten, dass z.B. auf dem oberen Band lange Ware und auf dem unteren kurze Ware hergestellt wird, so dass fast ohne Umstellarbeit mit der gleichen Linie kurze oder lange Teigwaren herstellbar sind.

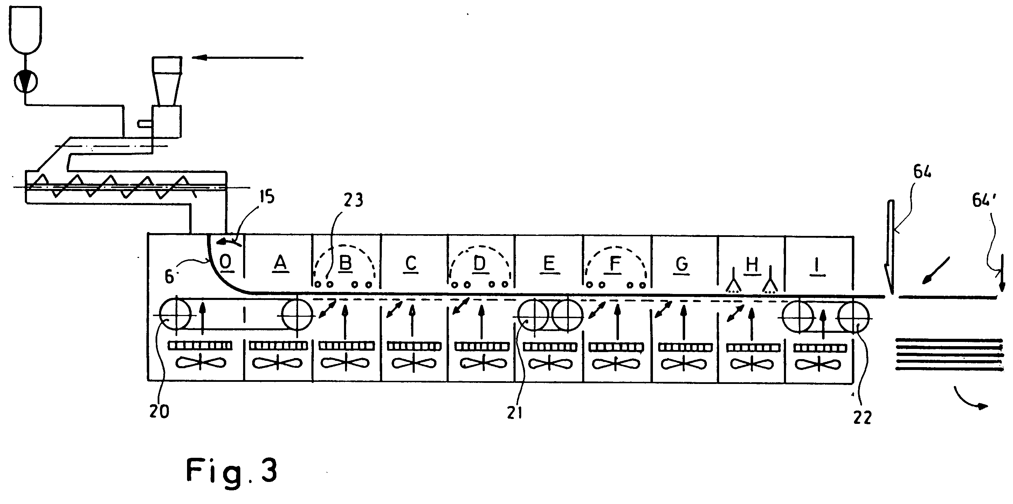

Die Fig. 3 zeigt eine sehr kompakte Bauweise einer vollständigen Anlage mit der Teigaufbereitung sowie der Trocknung der Teigstränge.

Wie in Fig. 1 ist auch in der Fig. 3 der Trockner in eine grössere Anzahl einzelner Klimazonen A, B, C, D usw. aufgeteilt. Dabei ist in den Klimazonen B, D, F je eine Mikrowellenheizungstufe 23 vorgesehen. Im weiteren ist ein Wareneinzugsmittel, z.B. in form eines Förderbandes 20, ein Warenaustragmittel 22, sowie ein Richtband 21 im mittleren Bereich angeordnet.

Das Warenaustragmittel, welches ebenfalls ein Förderband sein kann, führt auf die Teigstränge einen leichten Zug aus. In allen Varianten ist vorgesehen, dass eine grosse Anzahl von Teigsträngen, teppichartig über eine Breite von 1 bis 2,5m durch die Anlage geführt wird, wobei bei genügender Luftdurchströmung auch mehrere Teigstränge auf demselben Fördersystem übereinanderliegen können.

Die Trocknungsluft wird, wie später beschrieben im Bereich einer Wirbelschicht im Umluftbetrieb geführt und ergibt durch eine hohe Geschwindigkeit, resp. durch einen entsprechenden Auftrieb für die darin geführten Teigwaren, dass alle Teigstränge wirbelbettartig (auch fliessbettartig genannt) durch die verschiedenen Trocknungszonen getragen werden. Eine wirbelbettartige Trocknung ist auch in der CH-Patentschrift Nr. 615 269 (auch US-PS 41 26 945) gezeigt und beschrieben.

Vorteilhafterweise weist der später beschriebene Vibrotransporter Längsführungen auch Längsschoten genannt auf, welche den Teigsträngen oder Kurzwaren eine Längsführung geben.

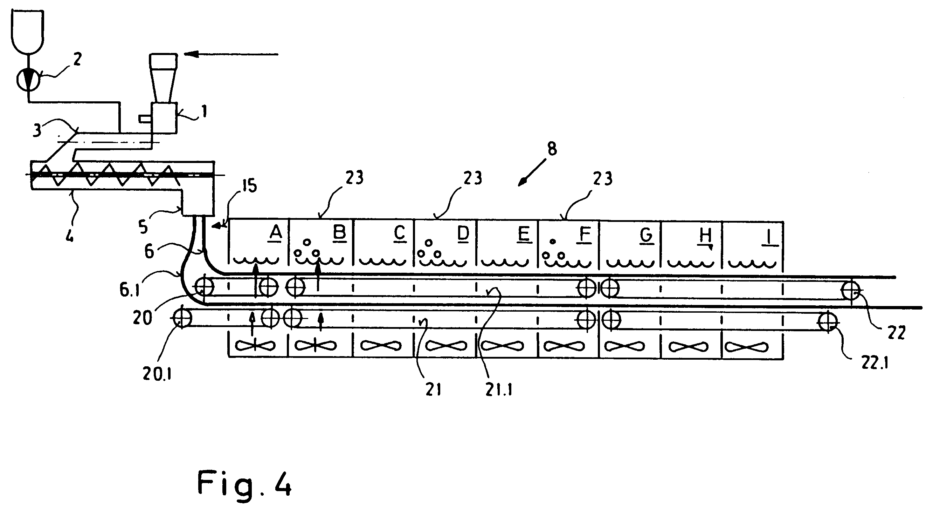

Die Lösung gemäss Fig. 4 kann analog zu Fig. 1 konzipiert sein, stellt jedoch analog der Linie von Fig. 2 eine zweietagige Ausführung dar, mit entsprechend einem oberen Fördersystem 9, sowie einem unteren Fördersystem 9.1, auf welchem je die Teigstränge 6 resp. 6.1 durch den Trockner geführt werden.

In den Fig. 1, 2 und 4 sind je die früher genannten Förderbänder gezeigt, welche - wie früher genannt - perforiert sind, um die früher genannte Luftdurchströmung zu ermöglichen. Es besteht jedoch auch die Möglichkeit, die später beschriebenen Vibroförderer an deren Stelle zu verwenden.

Der Trockner der Fig.4 ist wie die Trockner der Fig. 2 in eine grössere Zahl einzelner Klimazonen A, B, C, D usw. aufgeteilt. Dabei kann z.B. in den Klimazonen B, D und F je eine Mikrowellenheizstufe 23 vorgesehen werden. Solche Mikrowellenheizstufen werden von Fall zu Fall, gemäss Fachkenntnisse des entsprechenden Fachmannes, festgelegt.

Für Langwaren werden Wareneinzugsmittel sowie Warenaustragsmittel in Form eines Förderbandes 20 resp. 20.1 für das Wareneinzugsmittel und in Form der Förderbänder 22 resp. 22.1 für das Warenaustragsmittel vorgesehen. Im weiteren ist im mittleren Bereich ein Richtband 21 resp. 21.1 vorgesehen. Dabei soll das Warenaustragsmittel einen leichten Zug auf die Teigwarenstränge ausüben.

Für Langwaren ist im weiteren in allen Varianten vorgesehen, dass eine grosse Zahl von Teigsträngen teppichartig über eine Breite von 1 bis 2,5m durch die Anlage geführt werden können, wobei bei genügender Luftdurchströmung auch mehrere Teigstränge auf demselben Fördersystem übereinanderliegen können, und durch die vorgenannten Längsführungen (Längsschoten) an einen seitlichen Abgleiten gehindert werden.

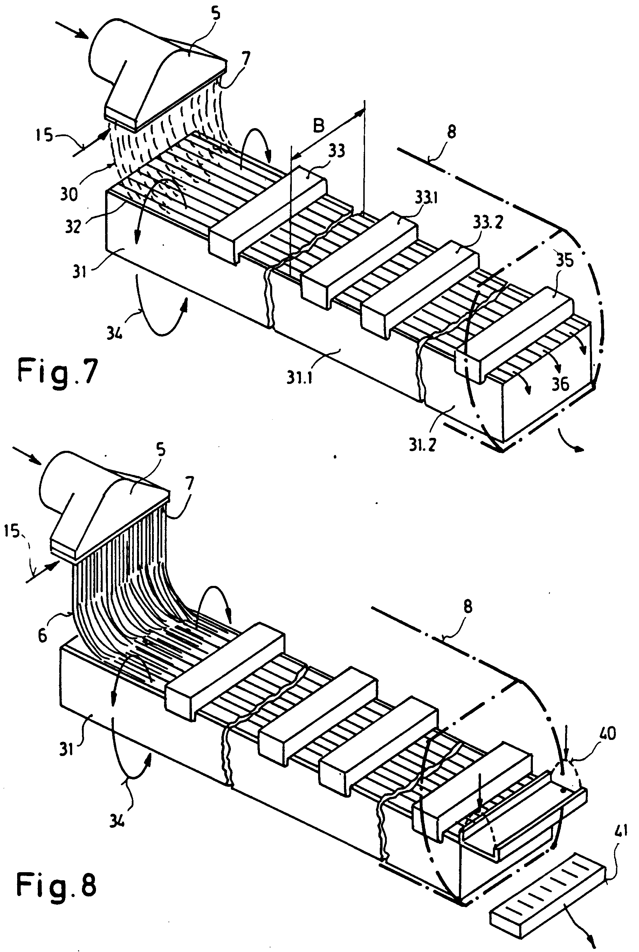

In der Folge wird nun auf die Fig. 7 Bezug genommen, die eine Kurzwarenlinie darstellt. Die Kurzwaren 30 fallen, nachdem sie von der Querschneideinrichtung 15 direkt an der Form 7 geschnitten wurden, direkt auf einen, später beschriebenen, Wirbeltrockner 31, welcher etwa die gleiche Breitenabmessung B aufweist, wie die Langform 7. Der Wirbeltrockner 31 weist die früher beschriebenen Längsschoten 32 (auch Längsführungen genannt) auf, welche den Kurzwaren 30 eine Längsführung geben, damit sich die Ware nicht auf eine Seite hin konzentriert.

Der Wirbeltrockner 31 weist eine fakultative Aufheizstufe 33 auf, für die Erhöhung der Warentemperatur. Eine solche Aufheizstufe kann beispielsweise eine Infrarotstufe sein.

Der Trockner 8 hat die typische äussere Form, wie sie in einer PCT-Anmeldung mit der Nummer CH92/00060 (Anmeldedatum: 01.04.92) der Anmelderin gezeigt und beschrieben ist, weshalb in dieser Anmeldung dieses System nicht in der ganzen Ausführlichkeit beschrieben ist, sondern auf die vorgenannte PCT-Anmeldung verwiesen wird.

Damit die Trocknung sowohl zeitlich sowie auch bezüglich des Trocknungsklimas vollständig unter Kontrolle gehalten werden kann, weist der Trockner, wie mit den Figuren 1 bis 4 dargestellt, mehrere Trocknungsstufen auf.

In der Fig. 7 ist neben dem Wirbeltrockner 31 ein Haupttrockner 31.1 sowie ein Endtrockner 31.2 vorgesehen, welchem die vorgenannten fakultativen Aufheizstufen 33 und je eigene Klimaabschnitte gemäss Fig. 10 und 11 zugeordnet sind.

Mit der Bezugsziffer 35 ist eine Stabilisierstufe für die getrocknete Ware angedeutet. Unter Stabilisieren der Teigwaren versteht man ein nach dem Trocknungsvorgang erneutes Anfeuchten der äusseren Schicht des Teigwarenquerschnittes, um ein Spätbruch zu vermeiden.

Am Austrittsende 36 weisen die Kurzwaren eine Feuchtigkeit von unter 13% auf, und können anschliessend gestapelt oder direkt verpackt werden.

In Fig. 8 ist in Analogie zur Fig. 7, unter Einhaltung des Erfindungsgedankens, eine Langwarenlinie dargestellt. Die Teigstränge werden hier am Anfang und am Ende einer Funktionscharge eine einheitliche Länge mittels der Querschneideinrichtung 15 geschnitten. Die Verpackungslänge wird jedoch erst am Austritt des Trockners 8 durch eine hier als Guillotine dargestellte Schneideinrichtung 40 hergestellt und die Verpackungslängen in Uebergabeform 41 der Stapelung in Behälter oder der Verpackung zugeführt.

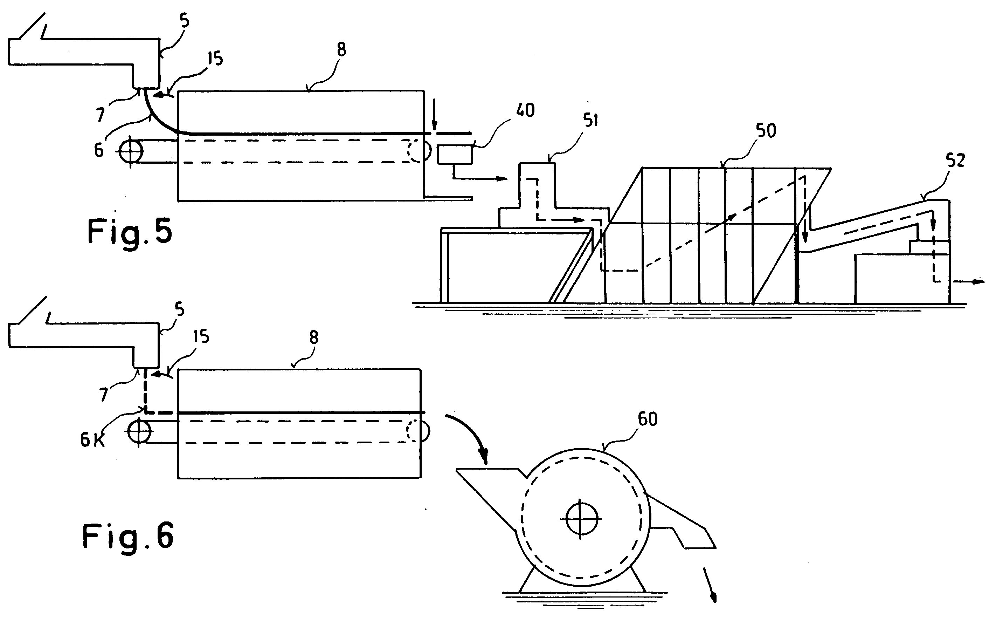

Die Fig. 5 zeigt die Lösung der Fig. 8 mit einem anschliessenden Behälterstapler 50, welchem über eine Uebergabevorrichtung 51 die geschnittene Ware als Verpackungslängen geordnet übergeben und nach Bedarf verpackt werden.

Kurzwaren können, wie in Fig. 6 gezeigt, in dem Trockner 8 auch nur bis zur Formfestigkeit bis etwa 20% Feuchtigkeit getrocknet und anschliessend in einem Trommeltrockner 16, welcher in einer europäischen Patentschrift Nr. 0 142 652 der Anmelderin gezeigt und beschrieben ist, auf die Lagerfeuchtigkeit fertig getrocknet werden.

Es ist auch durchaus möglich, anschliessend an einem Trockner 8 bzw. 31, 31.1, 31.2 einen Stapler 50 für Langwaren bzw Kurzwaren in einer Linie anzuordnen, wobei Kurzwaren entsprechend Pfeil 16 in der Fig. 1 vor der Längenschneidvorrichtung 40 ausgetragen werden, um diese in einem parallel zum Behälterstapler 50 angeordneten Kurzwarenstapler dazwischen zu lagern.

Nur teilweise getrocknete Kurzwaren können aber auch in einem parallel zu dem Behälterstapler 50 angeordneten Trommeltrockner 60 fertiggetrocknet werden.

Der Vorteil der erfindungsgemässen Teigwarenlinien liegen darin, bei entsprechender Wahl der Durchsatzleistung und entsprechender Klimatas mit demselben Trockner Langwaren oder Kurzwaren hergestellt werden können, was erlaubt, eine gesamte Produktionsanlage sehr optimal zu betreiben.

Bei einem weiteren Ausgestaltungsgedanken kann während der Endtrocknung die Warentemperatur gestuft auf weniger als 60°C gesenkt werden, und die Stabilisierung der Teigwaren über Mikrowellen erfolgen.

Die Art und Weise der Trocknung, wie sie mit dem Umluftsystem der Fig. 10 und 11 gezeigt ist, wurde in einer europäischen Patentschrift Nr. 0 129 892 B1 der Anmelderin gezeigt und beschrieben und ist im Handel unter dem Begriff "TURBO THERMATIK" bekannt. Was dieses Umluftsystem betrifft, sei deshalb auf diese veröffentlichte Patentschrift resp. deren Anmeldung hingewiesen.

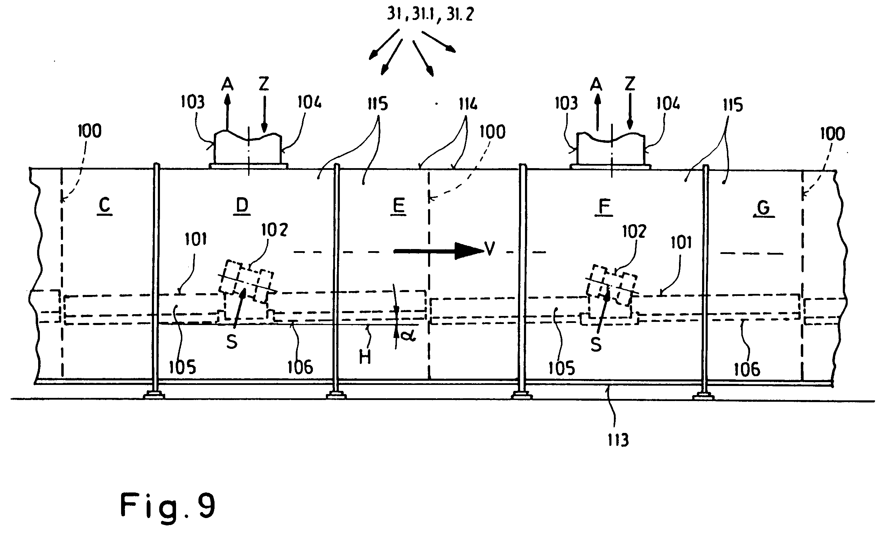

Die Fig. 9 zeigt vergrössert einen Ausschnitt aus den mit den Fig. 7 und 8 gezeigten Wirbeltrockner 31 resp. 31.1 und 31.2, in welchem Vibroschüttelrinnen, wie später im Zusammenhang mit Fig. 10 gezeigt, federnd gelagert sind, so dass mittels an den Schüttelrinnen 101 Vibrierelemente 102 den Vibraschüttelrinnen 101 eine Bewegung in Pfeilrichtung S gegeben wird, so dass das Produkt in Förderrichtung V in den Vibroschüttelrinnen gefördert wird.

Zusätzlich wird wie mit Fig. 10 und 11 dargestellt, die mit den Pfeilern 34 gekennzeichnete Luftströmung erzeugt, so dass sich das in den Vibroschüttelrinnen 101 befindliche Produkt (Teigwaren) von dieser Luft umströmt und dadurch getrocknet wird. Das Fördern des Produktes in Richtung V entsteht aufgrund der Hubbewegung des Vibrierelementes 102 in der Richtung S, wodurch eine Hüpfbewegung des Produktes in Richtung V entsteht.

Um das Produkt der einen Vibroschüttelrinne an den Trennstellen an die nächst folgende Schüttelrinne zu übergeben, weist jede Schüttelrinne eine Aufwärtsneigung entsprechend dem Winkel α zur Horizontalen H auf. Der Winkel α wird empirisch festgelegt, weist aber grundsätzlich nur wenige Grade auf.

Die Trennstellen sind Quertrennwände 100, welche zwar das Produkt von der einen Schüttelrinne zur anderen durchlassen, jedoch lufttechnisch im wesentlichen die Zonen C, D und E, resp. F voneinander trennen, so dass in jeder Zone mit Hilfe eines jeder Zone zugeordneten Umluftsystems gemäss Fig. 11 ein eigenes Klima und eine eigene Luftumwälzung geschaffen werden kann.

Die Vibrierelemente 102 sind an einem Rinnenrahmen 105 vorgesehen, welcher einen perforierten Rinnenboden 106 aufnimmt.

Wie aus Fig. 10 ersichtlich, ist der Rinnenrahmen 105 mittels Druckfedern 110 auf einem Tragelement 109 federnd abgestützt, um den vorerwähnten Hub in Richtung S zu erlauben.

Die früher genannten Längsführungen sind mit strichlierten Linien 130 angedeutet.

Um zu verhindern, dass Schmutz und Staub in tote Räume gelangen kannt, ist der Rinnenrahmen einerseits mittels einer flexiblen Abdichtung 107 mit einer Längstrennwand 112 des Wirbeltrockners und anderseits mittels einer flexiblen Abdichtung 108 mit dem vorerwähnten Tragelement 109 verbunden, welches seinerseits an der Längstrennwand 112 befestigt ist.

Unterhalb des perforierten Rinnenbodens 106 ist ein perforierter Auffangboden 111 an den Tragelementen 109 befestigt.

Letztlich weist der Wirbeltrockner in den Seitenkammern 123 je ein Heizelement 11 für das Aufheizen der Umluft und ein Umluftventilator 10 auf.

Die Seitenkammern sind nach aussen mit Seitenwände 115 abgedeckt, wobei die Seitenwände 115 je an ein Bodenteil 113 und an ein Deckenteil 114 dicht angrenzen.

Die Zuluft ist schematisch mit den Pfeilen Z und die Abluft mit den Pfeilen A dargestellt, wobei diese Zuluft resp. Abluft durch einen in die Teile 103 und 104 zweigeteilten Kanal ab- resp. zugeführt wird.

Es versteht sich, dass die Kanäle der Zuluft Z, wie die Kanäle der Abluft A in einer hier nicht dargestellten Weise mit dem vorgenannten Kanal 103; 104 verbunden sind.

Im übrigen sind die gleichen Elemente der Fig. 9 und 10 mit denselben Bezugszeichen versehen.

Die Fig. 11 zeigt schematisch das mit "TURBOTERMATIK" bezeichnete Umluftsystem pro Wirbeltrocknereinheit C, resp. D, resp. E, resp. F usw., in welchem dieselben Elemente dieselben Bezugszeichen aufweisen wie in den Fig. 9 und 10.

Zusätzlich zu erklären sei hier, dass ein Abluftventilator 117 eine durch einen Regler 132 und eine Luftklappe 121 regulierte Abluftmenge aus dem Abluftkanal 103 absaugt, während ein Zuluftventilator 118 eine durch einen Regler 131 regulierte Zuluft über einen Luftbefeuchter 119 in das mit 34 bezeichnete Umluftsystem einbläst.

Die Zuluft Z kann mittels eines Heizelementes 130 und die Abluft mittels eines Heizelementes 130 erwärmt werden. Das Erwärmen der Abluft dient der Reduktion der relativen Luftfeuchtigkeit.

Betreffend dem genauen Verwenden dieser sogenannten "Turbo-Thermatik" sei auf die vorgenannte EP-OS 0 129 892 B1 hingewiesen.

Zur Intensivierung des Trocknungsvorganges kann der Luft auch eine starke Schwingung übertragen werden. Solche Schwingungen können mittels pulsierender Luft erzeugt werden. Ein Beispiel zur Erzeugung solcher Schwingungen ist aus der DE-16 60 745 C2 (äquivalent zur US 41 26 945) der Anmelderin bekannt.

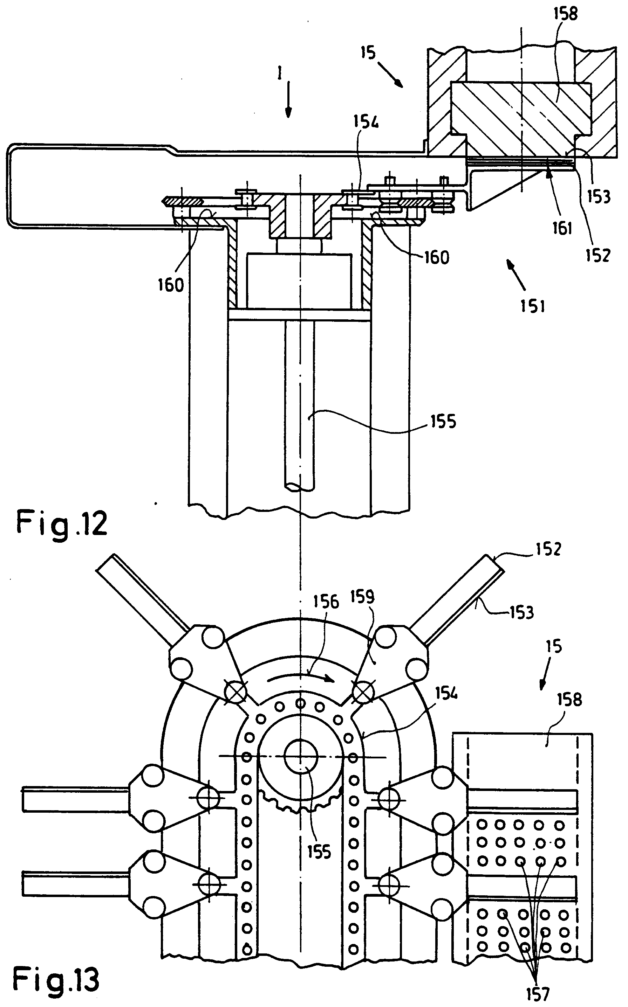

Die Figuren 12 und 13 zeigen die vorerwähnte Langform 15 mit einer angebauten Formschneideinrichtung 151.

Die Formschneideinrichtung 151 weist Schneidmesser 152 auf, welche an einer Endloskette 154 angeordnet sind.

Die Schneidmesser 152 weisen eine Schneidfläche 153 auf, welche bei Bewegung der Endloskette 154 in der Bewegungsrichtung 156 die durch die Teigformbohrungen 157 der Form 158 je nach Geschwindigkeit in vorgegebenen Längen schneidet.

Dabei besteht auch die Möglichkeit, die Schneidmesser kontinuierlich oder schrittweise vorzuschieben, je nach Länge der zu produzierenden Teigwaren.

Die Endloskette 154 wird durch einen Antrieb (nicht gezeigt) mittels einer Antriebswelle 155 angetrieben.

Die Messer 152 sind an einem Tragteil 159 angeordnet, der einerseits mit der Endloskette 154 verbunden ist und anderseits auf Führungsflächen 160 aufliegen.

Dabei sind die Messer derart angeordnet, dass die Schneidflächen 153 an der unteren Formfläche 161 anliegend die Teigwaren schneiden.

Je nach Art der Teigwaren, d.h. je nach Länge der Teigwaren werden mehr oder weniger Messer 152 vorgesehen.

Die Welle 155 ist entweder mit einem Schrittmotor (nicht dargestellt) oder/und mit einem Getriebevariator (nicht gezeigt) verbunden, um die Geschwindigkeit der Messer einerseits zu variieren, und/oder die vorgenannte schrittweise Bewegung durchzuführen.

Es versteht sich, dass mit der Schneidvorrichtung 151 kurze wie auch lange Teigwaren geschnitten werden können.

Ein wesentlicher Vorteil des erfindungsgemässen Verfahrens, resp. der erfindungsgemässen Vorrichtung besteht darin, dass die Teigwaren unmittelbar nach dem Schnitt ohne weitere Ueberhebungen in das klimatisierte Fördersystem eingegeben werden können.

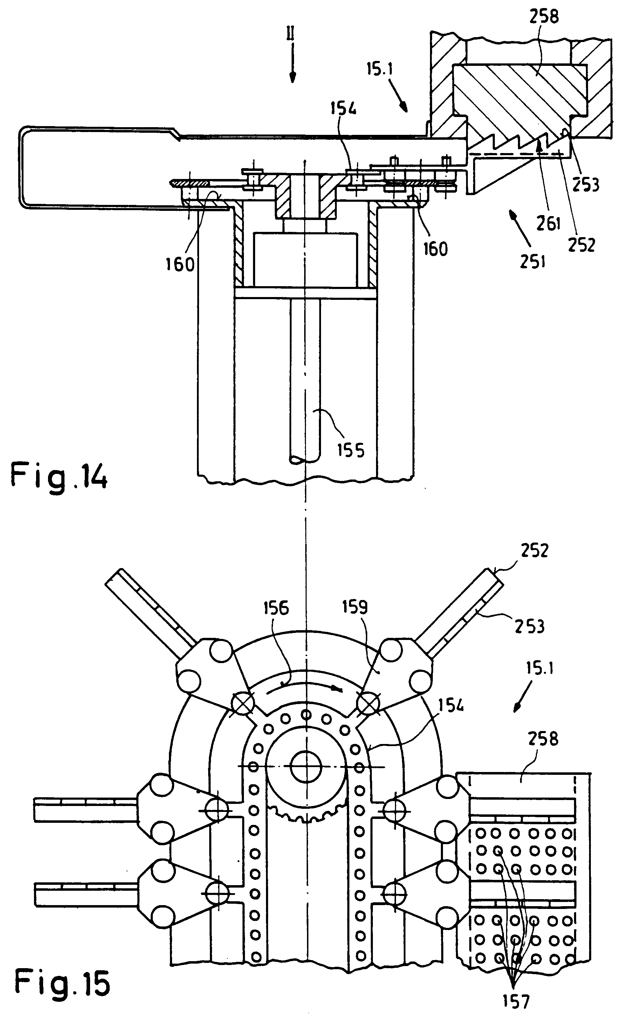

Die Fig. 14 zeigt eine Formschneideinrichtung 251 mit einer Langform 15.1 mit dem Unterschied gegenüber der Schneideinrichtung 151 von Fig. 13, indem die Formfläche 261 und die Schneidfläche 253 nicht wie in Fig. 12 geradlinig sind, sondern wie aus Fig. 14 ersichtlich, eine Sägezahnform aufweisen.

Die weiteren Elemente mit gleicher Funktion sind wie in Fig. 12 mit gleichen Bezugszeichen zu sehen.

Dasselbe gilt für die Fig. 15, aus welcher wie aus Fig. 13 die Teigformbohrungen ersichtlich sind, wobei diese Teigformbohrungen 157 jeweils derart auf die Sägezahnformfkante 261 verteilt sind, dass die Teigwaren durch die Schneidkante 253 schräg abgeschnitten werden, was man mit "Schrägschnitt" bezeichnet.

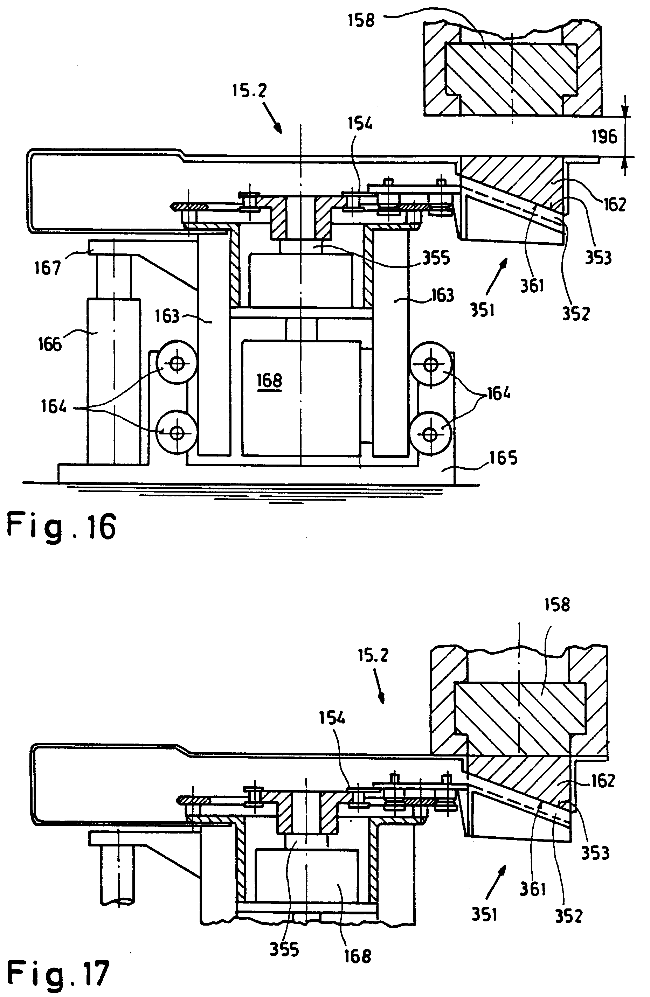

Die Fig. 16 weist gegenüber der Fig. 12 insofern einen Unterschied auf, als die Langform 15.2 nicht mehr Teil der Formschneideinrichtung 351 ist, sondern davon gelöst angeordnet ist. Im weiteren weist die Formschneideinrichtung 351 ebenfalls einen "Schrägschnitt" auf, jedoch hier nicht wie in Fig.14 als Sägezahn, sondern als linearen Schrägschnitt. Dabei ist die schräge Formfläche mit 361 und die schräge Schneidkante mit 353 gekennzeichnet.

Zwischen der Form 158 und dem Schneidmesser 352 ist eine Zwischenform 162 vorgesehen, um an dieser Zwischenform diese Teigwaren zu schneiden.

Eine solche Zwischenform kann auch im Zusammenhang mit der Formschneideinrichtung 251 verwendet werden, indem die Sägezahnform nicht direkt an der Form 258, sondern an einer Zwischenform (nicht gezeigt) möglich und sogar, wie später erklärt, erwünscht ist.

Die Endloskette 154 wird mittels eines Motors 168 über eine Motorwelle 355 angetrieben.

Wie für alle Schneidvorrichtungen gilt der Leitsatz, dass die Anzahl Messer von der Schneidkadenz und der Geschwindigkeit des Teigstranges abhängen.

Im Vergleich zu Fig. 16, in welcher zwischen der Form 158 und der Zwischenform 162 ein Abstand 196 gezeigt ist, liegt in Fig. 17 die Zwischenform 162 an der Form 158 an,. was der Anfahrsituation der Formschneideinrichtung 351 entspricht, während die Fig. 16 die Betriebsform zeigt.

Diese Betriebsform bietet die Möglichkeit, dass im Abstand 196 je nach Grösse dieses Abstandes eine Kühl- oder Belüftungszone zwischengeschaltet werden kann.

Um zu vermeiden, dass die aus der Form 158 austretenden Teigfäden die Zwischenform 162 in einer Lage, wie sie mit Fig. 16 gezeigt ist, nicht treffen, wird die Zwischenform 162 in der Startphase in die Lage gemäss Fig. 17 gebracht.

Des weiteren sind die Bohrungen für den Durchlass der Teigfäden aus der Form 158 grösser gewählt, als die Teigformbohrungen 157.

Damit das vorgenannte Verschieben der Formschneideinrichtung 351, und die Zwischenform 162 in die Lage gemäss Fig. 17 zu bringen, sind, im Gegensatz zur Formschneideinrichtung 151 der Fig. 12 und 14, in welchen die Schneideinrichtungen an sich stationär sind, Führungen 163 vorgesehen, an welchen Führungsrollen anliegen, um die Schneideinrichtung 351 auf und ab, mit Blick auf die Fig. 16 gesehen, bewegen zu können.

Es versteht sich, dass nicht nur in der Ebene gemäss der Fig. 16 Führungen 163 und Führungsrollen 164 vorgesehen sind, sondern auch in der Ebene senkrecht zur Zeichnungsebene, um eine stabile Führung zu erhalten.

Die Rollen 164 sind drehbar in einem stationären Träger 165 gelagert, welcher ebenfalls eine Zylinder-Kolben-Einheit 166 trägt, welcher kolbenseitig mit einem Arm 167 verbunden ist, der seinerseits von der linken, mit Blick auf Fig. 16 gesehen, Führung 163 befestigt ist, wodurch die Führungen 163 und mit diesen die ganze Formschneideinrichtung 351 auf und ab, mit Blick auf auf Fig. 16 gesehen, bewegbar ist, um die Zwischenform 162 in Anlage an die Form 158 in die Startlage und zurück in die Betriebslage zu bringen.

Die Zwischenform 162 ist, wie aus Fig. 16 und 17 ersichtlich, Bestandteil der Schneideinrichtung 351.

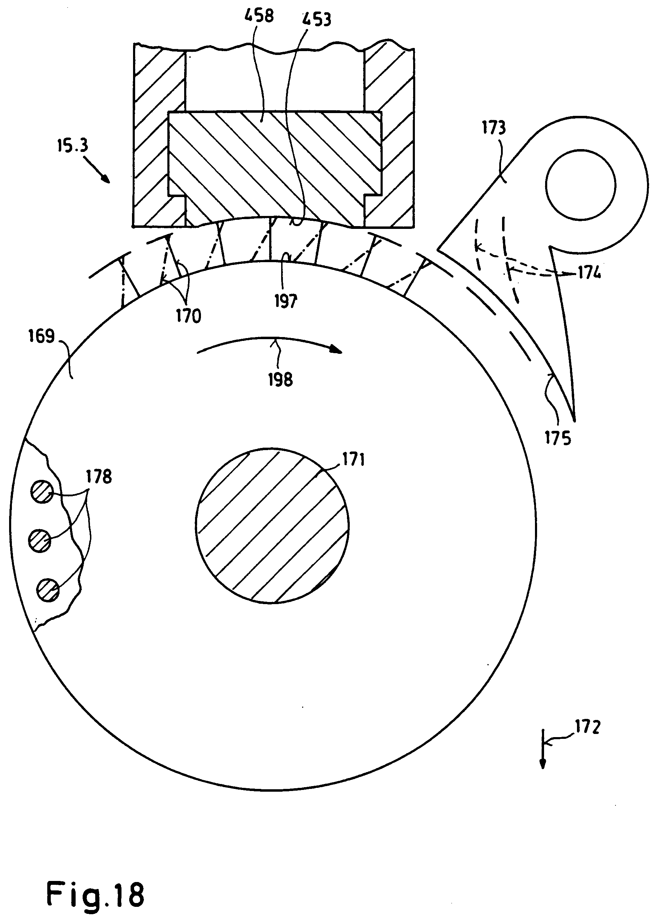

Die Fig. 18 zeigt eine Langform 15.3 mit einer Form 458, welche sich insofern von der Form 158 der Fig. 12 unterscheidet, als die Schneidkante bzw. die Schneidfläche eine konkave Wölbung aufweist, so dass ein Schneidrotor 169 mit daran befestigtem Schneidmesser 170 für das Schneiden der Teigwaren an der Form 453 verwendbar ist. Dabei können die Schneidmesser 170, wie mit ausgezogenen Linien dargestellt, radial oder, wie mit strichpunktierten Linien dargestellt, schräg gestellt werden.

Dabei fallen von den Schneidmessern 170 an der Schneidfläche 453 abgeschnittene Teigwaren auf die Rotoroberfläche 197 und infolge der Rotation gemäss Pfeilrichtung 198 schliesslich in Pfeilrichtung 172 in den früher beschriebenen Trockner 8.

Mit einem mit 173 gekennzeichneten Ventilator soll dargestellt sein, dass die Rotoroberfläche 197 belüftet werden kann, um entweder zu trocknen oder zu erwärmen, im letzten Falle muss erwärmte Luft vom Ventilator angesaugt werden.

Mit 174 sind Leitschaufeln gekennzeichnet, welche dafür sorgen, dass die Ventilatorluft im wesentlichen gleichmässig aus dem Luftaustritt 175 entweicht.

Mit drei mit 178 bezeichneten Heizelementen soll dargestellt werden, dass der Schneidrotor 169 beheizt werden kann, je nach Bedarf.

Der Rotor wird mittels einer Welle 171 drehbar gelagert und angetrieben.

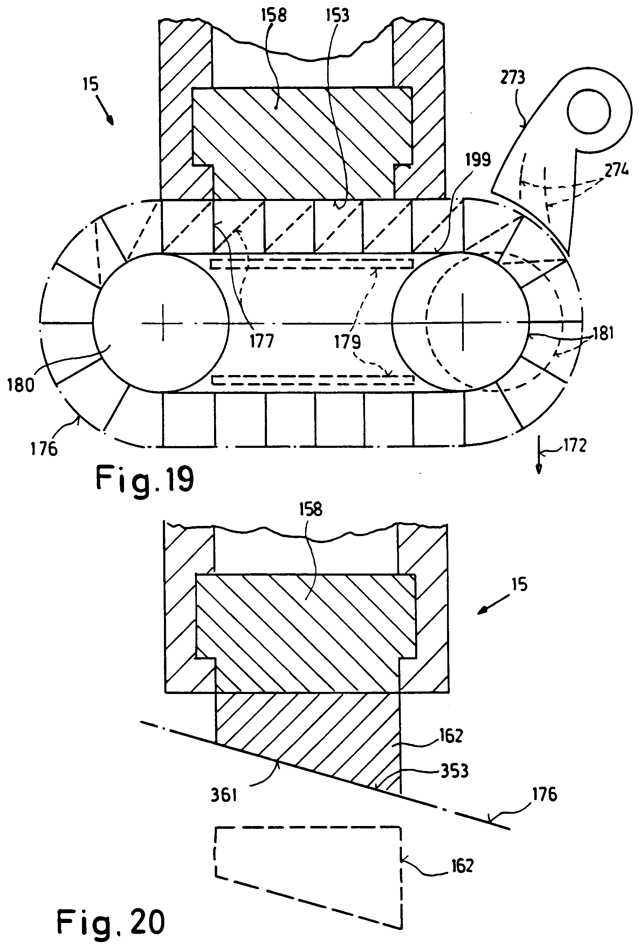

Fig. 19 zeigt insofern eine Alternative zur Schneideinrichtung der Fig. 18, als hier nicht ein Schneidrotor, sondern ein Schneidband 176 vorgesehen ist, welches mit Messern 177 versehen ist, um die Teigwaren an der Schneidfläche 153 der Form 158 zu schneiden. Dabei können die Messer gemäss ausgezogenen Linien senkrecht zum Band oder gemäss gestrichelten Linien schräg angeordnet sein.

Das Schneidband 176 ist an Umlenkrollen 180 und 181 geführt und mit einer der beiden Wellen antreibbar.

Die auf die Bandoberfläche 199 fallenden Teigwaren verlassen das Band mittels Schwerkraft in Richtung 172 in den früher genannten Trockner 8 hinein.

Dabei kann analog zur Fig. 18 ein Ventilator 273 mit Leitschaufeln 274 vorgesehen werden, um die Oberfläche und damit die Teigwaren mit warmer oder kühler Luft zu belüften und wie mit der mit strichlierten Linien dargestellten Umlenkrolle 181 kann die Länge des Schneidbandes 176 beliebig gewählt werden, so dass das Belüften mittels eines Ventilators 273 oder auch ohne Ventilator entsprechend beliebig gewählt werden kann.

Ebenfalls sind mit 179 Heizelemente dargestellt und zeigen dass das Band 176 beheizbar ist.

Mit Fig. 20 ist analog den Fig. 16 und 17 eine Zwischenform 162 vorgesehen in der Meinung, dass das Schneidband 176 schräg, wie mit der strichpunktierten Linie dargestellt, angeordnet ist, um einen früher erwähnten Schrägschnitt zu erzeugen. Die Formfläche 361 und die Schneidfläche 353 sind dementsprechend auch schräg dargestellt.

Die mit gestrichelten Linien dargestellte Zwischenform 162 soll darstellen, dass analog der Beschreibung der Figuren 16 und 17 die Zwischenform 162 eine Startlage und eine Betriebslage haben kann.

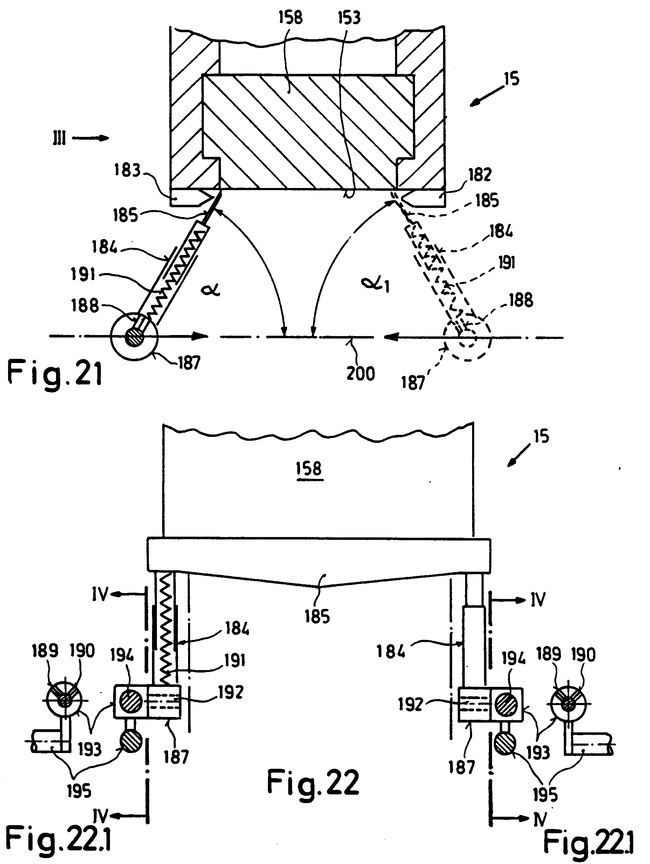

Die Fig. 21 und 22 zeigen eine Langform 15, an welcher ein Schneidmesser 185 quer zur Längsrichtung der Langform schneidet, im Gegensatz zu den Messern 152 der Fig. 12 und 13, welche sich in Längsrichtung der Form für das Schneiden bewegen.

Das Messer 185 ist zu diesem Zweck an einem Teleskoparm 184 befestigt, welcher mittels eines Schwenklagers 187 an einem Schwenkbolzen 192 drehbar gelagert ist, der seinerseits Teil einer Gleitführung 193 ist, welche entlang einer Gleitschiene gleitbar ist, die derart vorgesehen ist, dass das Schwenklager 187 entlang einer Bewegungsbahn 200 hin und her bewegbar ist.

Der vorgenannte Teleskoparm 184 ist deshalb teleskopisch, damit das Messer 185 eine mit dem Winkel α bzw. α.1 gekennzeichnete Schräglage annehmen kann.

Um nun die Schräglage gemäss α in die Schräglage gemäss α.1 zu wechseln ist auf der rechten Seite, mit Blick auf Fig. 21 gesehen, ein Anschlag 182 und auf der linken Seite ein Anschlag 183 an der Langform 15 vorgesehen.

Mittels des teleskopartigen Armes 184 und der darin vorgesehenen Feder 191 kann der vorgenannte Lagewechsel vorgenommen werden, sobald das Messer 185 am entsprechenden Anschlag 182 resp. 183 anlegt und das Schwenklager 184 in die mit Fig. 21 gezeigte Endposition gebracht wird.

Um die Bewegung des Schwenklagers 187 entlang der Bewegungsbahn 200 durchzuführen, ist das Schwenklager 187 mit einer Kolbenstange einer Kolben-Zylinder-Einheit verbunden (nur in Fig. 22 und 22.1 dargestellt). Die letztgenannte Kolben-Zylinder-Einheit ist nicht weiter dargestellt und kann eine ganz normale umsteuerbare Einheit sein.

Um die Lage des Messers 185 in den in Fig. 21 mit dem Winkel α bzw.α.1 dargestellten Winkel für die Bewegung entlang der Schneidebene 153 zu fixieren, ist im Schwenklager 187 ein Einrastnocken 188 (Fig. 21) und in den Schwenklagern 187 (Fig. 22.1) sind Einrastnuten 189 und 190 vorgesehen, und zwar derart, dass das Messer 185 die mit dem Winkel α bzw. α.1 gekennzeichnete Lage einhält.

Da an sich die Gleitschienen 194 stationär und relativ starr sind, muss der Teleskoparm so weit flexibel sein, dass die Einrastnocken 188 für den Lagewechsel aus der Einrastnute 189 in die Einrastnute 190 wechseln können und umgekehrt.

Das Messer 185 kann, wie in Fig. 22 dargestellt sein mit dem Vorteil, dass gegebenenfalls die Anschläge 182 und 183 nicht unterhalb, sondern an den Stirnseiten der Langform sein können.

Eine weitere in den Zeichnungen nicht dargestellte Möglichkeit besteht darin, dass die an sich bekannten Rundformen mit den rotierenden Messern, mittels welchen in an sich bekannter Weise Kurzwaren produziert werden, in Reihe nebeneinander angeordnet werden können anstelle einer Langform, so dass die mit den rotierenden Messern geschnittenen Teigwaren ebenfalls direkt in den Trockner 8 fallen.

Im weiteren besteht für das Schneiden der früher erwähnten Feuchtteigwaren mit Bereich des Trockners ein an sich bekanntes Schneidelement von der Art einer Guillotine, welche in demjenigen Bereich angeordnet ist, in welchem die Teigwaren noch die gewünschte Feuchtigkeit aufweisen. Die Lage dieser Schneidmaschine muss von Fall zu Fall bestimmt werden. Die Schneidmaschine weist ein sich über die ganze Breite des Trockners erstreckendes Schneidmesser und eine entsprechend sich über die ganze Breite erstreckende Schneidplatte auf von beispielsweise 2 bis 3 cm Breite, über welche die feuchten Teigwaren mittels des Fortbewegungsschwingmechanismus des Trockners bewegt werden, bis im richtigen und vorgewählten Zeitpunkt das vorgenannte Messer mit einem sehr raschen Schnitt die vorwärtsbewegten Teigwaren schneidet. Das Vorschieben der Teigwaren hat ca. eine Geschwindigkeit von 4 m pro Minute.

Das ebenfalls früher erwähnte Schneiden der trockenen Langwaren am Ende der Linie geschieht durch ebenfalls an sich bekannte, mit Schneidfräsen versehene Schneidvorrichtungen, welche beispielsweise die Spaghetti auf die Verpackungslänge schneiden.

Zusammenfassend sei erwähnt, dass das Schneiden der Teigwaren einerseits direkt an der Form zu beliebig langen Teigwaren oder im Bereich des Trockners oder am Ende der Linie geschehen kann.

## Patentansprüche

1. Verfahren zur Herstellung von kurz(6)- und Langteigwaren (30) durch Formpressen über eine Form (7) und anschliessendem Trocknen in einem kontinuierlichen Durchlauftrockner (8) mit Wirbelbett (4), wobei die Formpressung über die ganze Breite (B) des Durchlauftrockners (8) erfolgt und die Teigwaren (6, 30) direkt in die Wirbelschicht eingespiesen wird, dadurch gekennzeichnet,
dass die Teigware (6, 30) direkt über eine Vortrocknungszone (8.0) und anschliessend in eine im wesentlichen horizontalen Ebene gebracht und für das Trocknen in der Haupttrocknung (8.1ff) darin gehalten wird,
dass die Kurzware (6) direkt hinter der Formpressung (7) innerhalb der Vortrocknungszone (8.0) und die Langware (30) nach der vollständigen oder teilweisen Trocknung geschnitten wird.

2. Verfahren nach Patentanspruch 1, dadurch gekennzeichnet, dass die Pressung der Ware (6, 30) über eine Langform oder kreisflächige Formen erfolgt.

3. Verfahren nach den Patentansprüchen 1 oder 2, dadurch gekennzeichnet, dass die Temperatur der Ware (6, 30) von der Presstemperatur auf über 70°C, vorzugsweise auf über 80°C erhöht wird.

4. Verfahren nach mindestens einem der Patentansprüche 1 bis 3, dadurch gekennzeichnet, dass die Ware nach einer Vortrocknung als heisser Strang bei wenigstens 70°C entweder in Trocknungslängen, oder in Fertigwarenlängen geschnitten und in warmem Zustand in einem, an sich bekannten Massentrocknungsverfahren getrocknet, bzw. in die Haupttrocknung geführt wird.

5. Verfahren nach Patentanspruch 4, dadurch gekennzeichnet, dass die Waren nur bis zu einer genügenden Formfestigkeit auf unter 28%, vorzugsweise auf unter 25% Feuchtigkeit getrocknet und feucht geschnitten werden.

6. Verfahren nach Patentanspruch 5, dadurch gekennzeichnet, dass anschliessend die geschnittene Ware (6, 30), z.B. portionenweise auf unter 13% Produktfeuchtigkeit fertig getrocknet wird.

7. Verfahren nach den Patentansprüchen 1 und 3, dadurch gekennzeichnet, dass die Trocknung in einer grösseren Zahl Trocknungsstufen (8.0, 8.1, 8.2, 8.3, 8.4, 8.5, 8.6, A, B, C, D, E, F, G, H, I) folgt, wobei jede Stufe eine eigene steuerbare Klimaführung sowie je ein eigenes Umluftsystem aufweist und vorzugsweise die Vortrocknung der Teigware bei einer Warentemperatur von 70°C bis zu und über 80°C und die Haupttrocknung bei einer Warentemperatur von 80°C bis 150°C, vorzugsweise von 90°C bis 125°C erfolgt.

8. Verfahren nach Patentanspruch 8, dadurch gekennzeichnet, dass die Teigwaren (6, 30) horizontal und die Trocknungsluft vertikal quer zu den Teigwaren (6, 30) geführt wird, wobei vorzugsweise die Luft in eine Pulsation bzw. Schwingung versetzt wird, zur Steigerung des Trocknungsvorganges, und die Luftgeschwindigkeit vorzugsweise steuerbar ist, so dass eine Fluidisierung der Teigstränge sich einstellt, wobei die Teigstränge vorzugsweise über ein Stetigfördermittel, wie beispielsweise über ein luftdurchlässiges Endlosförderband (20, 21, 22) oder eine luftdurchlässige Vibrotransporteinheit (101) geführt werden.

9. Teigwarenlinie zur Herstellung von Lang(6)- oder Kurzteigwaren (30) zur Durchführung des Verfahrens nach mindestens einem der vorhergehenden Ansprüche mit einem als Durchlauftrockner ausgebildeten Trockner (8.0ff) mit einer über die Breite des Trockners (8.0ff) sich erstreckende Formpresse (7),
dadurch gekennzeichnet, dass unmittelbar hinter der Pressform (7) der eine von der Aussenluft abgeschlossene Vortrocknungszone (8.0) und Haupttrocknungszone (8.1ff) aufweisende Trockner angeordnet ist,
daß der Durchlauftrockner ein im wesentlichen in einer horizontalen Ebene durchgehendes Durchlauffördersystem für die Teigwaren aufweist,
und dass innerhalb der Vortrocknungszone (8.0) eine für Kurzteigwaren (6) vorgesehene Schneidevorrichtung (15) und eine für Langteigwaren (30) vorgesehene Schneidevorrichtung (13) im Bereich des Trockners (8.1ff) oder am Ende der Linie angeordnet sind.

10. Teigwarenlinie nach Patentanspruch 9, dadurch gekennzeichnet, dass die Form (7) entweder als eine sich über die Breite (B) des Trockners (8) erstreckende Langform oder als über die Breite (B) des Trockners erstreckende Einzelformen ausgebildet ist bzw. sind.

11. Teigwarenlinie nach Patentanspruch 9 oder 10, dadurch gekennzeichnet, dass eine Schneidvorrichtung (15) der Pressform (7) zugeordnet ist und Messer aufweist, welche sich für das Schneiden der Teigwaren in einer Richtung bewegen, welche sich über die Breite (B) des Trockners erstreckt.

12. Teigwarenlinie nach Patentanspruch 9 oder 10, dadurch gekennzeichnet, dass eine Schneidvorrichtung (15) der Pressform (7) zugeordnet ist und Messer (152) aufweist, welche sich für das Schneiden der Teigwaren in einer Richtung bewegen, welche sich in Längsrichtung des Trockners (8) erstrecken.

13. Teigwarenlinie nach Patentanspruch 9, dadurch gekennzeichnet, dass Einzelformen angeordnet sind, wobei pro kreisförmig angeordnete Teigformbohrung (157), je eine Schneidvorrichtung vorgesehen ist, deren Messer (152) sich für das Schneiden der Teigwaren kreisförmig bewegt.

14. Teigwarenlinie nach Patentanspruch 11 oder 12, dadurch gekennzeichnet, dass die Messer (152) nur in Schneidrichtung (156) bewegt und nach dem letzten Schnitt von der Form wegbewegt werden.

15. Teigwarenlinie nach Patentanspruch 14, dadurch gekennzeichnet, dass die Messer (152) in einer Endlosbewegung bewegt werden.

16. Teigwarenlinie nach Patentanspruch 15, dadurch gekennzeichnet, dass die Messer (152) an einer Endloskette (154) angeordnet sind.

17. Teigwarenlinie nach Patentanspruch 15, dadurch gekennzeichnet, dass die Messer (152) an einer Endlosband (176) angeordnet sind.

18. Teigwarenlinie nach Patentanspruch 15, dadurch gekennzeichnet, dass die Messer (152) an einer Walze (155) angeordnet sind.

19. Teigwarenlinie nach Patentanspruch 17 oder 18, dadurch gekennzeichnet, dass das Endlosband (176) oder die Walze beheizbar ist.

20. Teigwarenlinie nach Patentanspruch 17 oder 18, dadurch gekennzeichnet, dass eine Vorrichtung vorgesehen ist, um die Oberfläche des Endlosbandes 176) oder der Walze zu belüften.

21. Teigwarenlinie nach Patentanspruch 12, dadurch gekennzeichnet, dass die Messer (185) für das Schneiden der Teigwaren an der Form je hin- und herbewegbar sind.

22. Teigwarenlinie nach Patentanspruch 21, dadurch gekennzeichnet, dass die Messer (185) in einer linearen Führung bewegt werden.

23. Teigwarenlinie nach Patentanspruch 21, dadurch gekennzeichnet, dass die Messer (185) je eine Neigung (α) zur Schnittfläche der Pressform aufweisen.

24. Teigwarenlinie nach Patentanspruch 9, dadurch gekennzeichnet, dass eine zweite Schneidvorrichtung vorgesehen ist, die während dem Schnitt der Teigwaren mit der Geschwindigkeit der Teigwaren bewegbar ist.

25. Teigwarenlinie nach Patentanspruch 9, dadurch gekennzeichnet, dass eine Teigführung zwischen Presse und Trockner vorgesehen ist, und dass die Schneidvorrichtung die Teigwaren an dieser Teigführung schneidet.

## Claims

1. Process for the manufacture of short (6) and long (30) farinaceous products by compression moulding via a mould (7) and subsequent drying in a continuous tunnel dryer (8) with fluidised bed (4), and compression moulding is carried out over the entire width (B) of the tunnel dryer (8) and the farinaceous products (6, 30) are fed directly into the fluidised bed,
**characterised in that**
the farinaceous product (6, 30) is placed directly over a pre-drying zone (8.0) and thereafter in an essentially horizontal plane and held therein for drying in the main dryer (8.1 ...),
the short farinaceous product (6) is cut directly behind the compression moulding (7) within the pre-drying zone (8.0), and the long farinaceous product (30) is cut after full or partial drying.

2. Process according to Patent Claim 1, **characterised in that** compression of the product (6, 30) is carried out via an elongated mould or circular moulds.

3. Process according to Patent Claims 1 or 2, **characterised in that** the temperature of the product (6, 30) is increased by the compression temperature to over 70°C, preferably to over 80°C.

4. Process according to at least one of Patent Claims 1 to 3, **characterised in that** the product is after pre-drying cut as a hot strip at a minimum of 70°C either into drying lengths or into finished product lengths and in a warm state dried in a conventional capacity drying process or guided into main drying.

5. Process according to Patent Claim 4, **characterised in that** the products are dried only to a satisfactory shape stability to below 28%, preferably to below 25%, humidity and cut in a moist state.

6. Process according to Patent Claim 5, **characterised in that** the cut product (6, 30) is subsequently ready dried, for example as portions, to below 13% product moisture.

7. Process according to Patent Claims 1 and 3, **characterised in that** drying is then carried out in a larger number of drying stages (8.0, 8.1, 8.2, 8.3, 8.4, 8.5, 8.6, A, B, C, D, E, F, G, H, I), and each stage comprises its own controllable air-conditioning duct as well as each its own air-circulation system, and pre-drying of the farinaceous product is preferably carried out at a product temperature between 70°C and up to over 80°C, and main drying is carried out at a product temperature of between 80°C and 150°C, preferably between 90°C and 125°C.

8. Process according to Patent Claim 8, **characterised in that** the farinaceous products (6, 30) are guided horizontally, and the drying air is guided vertically transversely to the farinaceous products (6, 30), and the air is preferably pulsated or vibrated so as to increase the drying process, and the air speed is preferably controllable so that fluidisation of the product strips occurs, and the product strips are preferably guided via a continuous conveying means, for example an air-permeable continuous conveyer belt (20, 21, 22) or an air-permeable vibro-transport unit (101).

9. Farinaceous product line for the manufacture of long (6) or short (30) farinaceous products for carrying out the process according to at least one of the above claims, comprising a dryer (8.Off) designed as a tunnel dryer having a moulding press which extends over the width of the dryer (8.Off), **characterised in that** directly behind the compression mould (7) is arranged the dryer comprising a pre-drying zone (8.0) which is sealed off from outside air and the main drying zone (8.1 ...),
the tunnel dryer comprises a continuous conveyer system for the farinaceous products which essentially passes through in a horizontal plane, and
within the pre-drying zone (8.0) is provided a cutting mechanism (15) for short farinaceous products (6) and a cutting mechanism (13) for long farinaceous products (30) in the area of the dryer (8.1 ...) or at the end of the line.

10. Farinacious product line according to Patent Claim 9, **characterised in that** the mould (7) is either an elongated mould which extends over the width (B) of the dryer (8) or designed as individual moulds which extends over the width (B) of the dryer.

11. Farinacious product line according to Patent Claim 9 or 10, **characterised in that** a cutting mechanism (15) is associated with the press mould (7) and comprises knives which move in one direction which extends over the width (B) of the dryer for the purpose of cutting the farinaceous products.

12. Farinaceous product line according to Patent Claim 9 or 10, **characterised in that** a cutting mechanism (15) is associated with the press mould (7) and comprises knives (152) which move in one direction which extends in the longitudinal direction of the dryer (8) for the purpose of cutting the farinaceous products.

13. Farinaceous product line according to Patent Claim 9, **characterised in that** individual moulds are arranged, a for each circularly arranged product mould bore (157) is provided a respective cutting mechanism the knife (152) of which moves circularly for the purpose of cutting the farinaceous products.

14. Farinaceous product line according to Patent Claim 11 or 12, **characterised in that** the knives (152) are only moved in the cutting direction (156) and following a last cut moved away from the mould.

15. Farinaceous product line according to Patent Claim 14, **characterised in that** the knives (152) are moved in a continuous movement.

16. Farinaceous product line according to Patent Claim 15, **characterised in that** the knives (152) are arranged on a continuous chain.

17. Farinaceous product line according to Patent Claim 15, **characterised in that** the knives (152) are arranged on a continuous belt (176).

18. Farinaceous product line according to Patent Claim 15, **characterised in that** the knives (152) are arranged on a roller (155).

19. Farinaceous product line according to Patent Claim 17 or 18, **characterised in that** the continuous belt (176) or the roller are heatable.

20. Farinaceous product line according to Patent Claim 17 or 18, **characterised in that** a device is provided for aerating the surface of the continuous belt (176) or the roller.

21. Farinaceous product line according to Patent Claim 12, **characterised in that** the knives (185) for cutting the products are movable to and fro on the mould.

22. Farinaceous product line according to Patent Claim 21, **characterised in that** the knives (185) are moved in a linear guide.

23. Farinaceous product line according to Patent Claim 21, **characterised in that** the knives (185) are at a respective slant (α) to the cutting surface of the press mould.

24. Farinaceous product line according to Patent Claim 9, **characterised in that** a second cutting mechanism is provided which is movable at the speed of the products whilst they are cut.

25. Farinaceous product line according to Patent Claim 9, **characterised in that** a product guide between press and dryer is provided, and the cutting mechanism cuts the products at this product guide.

## Revendications

1. Procédé destiné à fabriquer des pâtes alimentaires courtes (6) et longues (30), par moulage à la presse par l'intermédiaire d'une filière ou moule (7), et ensuite à sécher celles-ci dans un séchoir tunnel en continu (8) à lit fluidisé (4), le moulage à la presse s'effectuant sur toute la largeur (B) du séchoir tunnel en continu (8), et les pâtes alimentaires (6, 30) étant envoyées directement dans la couche fluidisée, **caractérisé** en ce que les pâtes alimentaires (6, 30) sont amenées directement à travers une zone de pré-séchage (8.0) et ensuite dans un plan sensiblement horizontal en y étant maintenues pour le séchage dans la zone de séchage principal (8.1ff), et en ce que les pâtes courtes (6) sont coupées directement à la suite du moulage à la presse (7), à l'intérieur de la zone de pré-séchage (8.0), et les pâtes longues (30) sont coupées après séchage complet ou partiel.

2. Procédé selon la revendication 1, **caractérisé** en ce que le pressage des pâtes (6, 30) s'effectue par l'intermédiaire d'une filière ou moule long ou des moules de surface circulaire.

3. Procédé selon les revendications 1 ou 2, **caractérisé** en ce que la température des pâtes (6, 30) est élevée de la température de pressage, jusqu'à plus de 70°C, de préférence à plus de 80°C.

4. Procédé selon l'une au moins des revendications 1 à 3, **caractérisé** en ce que les pâtes, après un pré-séchage, sous forme de tige chaude à au moins 70°C, sont séchées soit en longueurs de séchage, soit coupées en longueurs de pâtes finies, et sont séchées à l'état chaud, selon un procédé de séchage de masse connu en soi, ou sont amenées au séchage principal.

5. Procédé selon la revendication 4, **caractérisé** en ce que les pâtes ne sont séchées que jusqu'à présenter une résistance de forme suffisante, à moins de 28%, de préférence moins de 25% d'humidité, et sont coupées à l'état humide.

6. Procédé selon la revendication 5, **caractérisé** en ce qu'on achève ensuite le séchage des pâtes coupées (6, 30), par exemple par portions, à une humidité du produit inférieure à 13%.

7. Procédé selon la revendication 1, **caractérisé** en ce que le séchage s'effectue dans un nombre plus important d'étages de séchage (8.0, 8.1, 8.2, 8.3, 8.4, 8.5, 8.6, A, B, C, D, E, F, G, H, I), chaque étage présentant une propre commande de climatisation ainsi qu'un propre système de circulation d'air, et en ce que le pré-séchage des pâtes alimentaires s'effectue de préférence à une température des pâtes de 70°C jusqu'à 80°C et plus, et le séchage principal à une température des pâtes de 80°C à 150°C, de préférence de 90°C à 125°C.

8. Procédé selon la revendication 7, **caractérisé** en ce que les pâtes alimentaires (6, 30) sont déplacées horizontalement et l'air de séchage est mis en circulation verticalement, transversalement aux pâtes alimentaires (6, 30), l'air étant de préférence pulsé et mis en oscillation pour augmenter l'effet de séchage, et en ce que la vitesse de l'air peut être commandée, de sorte qu'il s'établit une fluidisation des tiges de pâtes, les tiges de pâtes étant de préférence guidées par-dessus un moyen de transport en continu, tel que par exemple au-dessus d'une bande transporteuse sans fin (20, 21, 22) perméable à l'air, ou bien une unité de transport par vibrations (101) perméable à l'air.

9. Ligne de fabrication de pâtes alimentaires pour la fabrication de pâtes alimentaires longues (6) ou courtes (30), et destinée à la mise en oeuvre du procédé selon l'une au moins des revendications précédentes, la ligne comprenant un séchoir (8.0ff) se présentant sous la forme d'un séchoir tunnel, ainsi qu'une presse de moulage (7) s'étendant sur toute la largeur du séchoir (8.0ff), **caractérisée** en ce que directement à la suite de la filière ou du moule de presse (7), est disposé le séchoir présentant une zone de pré-séchage (8.0) fermée à l'encontre de l'air extérieur, et une zone de séchage principale (8.1ff), en ce que le séchoir tunnel présente un système de transport de passage continu pour les pâtes alimentaires, s'étendant sensiblement dans un plan horizontal, et en ce qu'un dispositif de coupe (15) prévu pour les pâtes alimentaires courtes (6) est disposé à l'intérieur de la zone de pré-séchage (8.0), et un dispositif de coupe (13) prévu pour les pâtes alimentaires longues (30) est disposé dans la zone du séchoir (8.1ff) ou à la fin de la ligne.

10. Ligne de fabrication de pâtes alimentaires selon la revendication 9, **caractérisée** en ce que le moule (7) se présente soit sous la forme d'un moule long s'étendant sur la largeur (B) du séchoir (8), soit sous la forme de moules individuels s'étendant sur la largeur (B) du séchoir.

11. Ligne de fabrication de pâtes alimentaires selon la revendication 9 ou 10, **caractérisée** en ce qu'un dispositif de coupe (15) est associé au moule de presse (7) et comporte des couteaux, qui, pour la coupe des pâtes alimentaires, se déplacent dans une direction s'étendant sur la largeur (B) du séchoir.

12. Ligne de fabrication de pâtes alimentaires selon la revendication 9 ou 10, **caractérisée** en ce qu'un dispositif de coupe (15) est associé au moule de presse (7) et comporte des couteaux (152) qui, pour la coupe des pâtes alimentaires, se déplacent dans une direction s'étendant dans la direction longitudinale du séchoir (8).

13. Ligne de fabrication de pâtes alimentaires selon la revendication 9, **caractérisée** en ce que sont prévus des moules individuels, un dispositif de coupe étant prévu par alésage de moule de pâtes (157) disposés de manière circulaire, le couteau (152) des dispositifs de coupe se déplaçant de manière circulaire pour la coupe des pâtes alimentaires.

14. Ligne de fabrication de pâtes alimentaires selon la revendication 11 ou 12, **caractérisée** en ce que les couteaux (152) ne sont déplacés que dans la direction de coupe (156), et sont éloignés du moule après la dernière coupe.

15. Ligne de fabrication de pâtes alimentaires selon la revendication 14, **caractérisée** en ce que les couteaux (152) sont déplacés selon un mouvement sans fin.

16. Ligne de fabrication de pâtes alimentaires selon la revendication 15, **caractérisée** en ce que les couteaux (152) sont disposés sur une chaîne sans fin (154).

17. Ligne de fabrication de pâtes alimentaires selon la revendication 15, **caractérisée** en ce que les couteaux (152) sont disposés sur une bande sans fin (176).

18. Ligne de fabrication de pâtes alimentaires selon la revendication 15, **caractérisée** en ce que les couteaux (152) sont disposés sur un tambour (155).

19. Ligne de fabrication de pâtes alimentaires selon la revendication 17 ou 18, **caractérisée** en ce que la bande sans fin (176) ou le tambour peuvent être chauffés.

20. Ligne de fabrication de pâtes alimentaires selon la revendication 17 ou 18, **caractérisée** en ce qu'il est prévu un dispositif pour ventiler la surface de la bande sans fin (176) ou du tambour.

21. Ligne de fabrication de pâtes alimentaires selon la revendication 12, **caractérisée** en ce que les couteaux (185) pour la coupe des pâtes alimentaires, peuvent être déplacés selon un mouvement alternatif de va-et-vient sur le moule.

22. Ligne de fabrication de pâtes alimentaires selon la revendication 21, **caractérisée** en ce que les couteaux (185) sont déplacés dans un guidage linéaire.

23. Ligne de fabrication de pâtes alimentaires selon la revendication 21, **caractérisée** en ce que les couteaux (185) présentent chacun une inclinaison (α) par rapport à la surface de coupe du moule de presse.

24. Ligne de fabrication de pâtes alimentaires selon la revendication 9, **caractérisée** en ce qu'il est prévu un second dispositif de coupe qui durant la coupe des pâtes alimentaires peut être déplacé à la vitesses des pâtes alimentaires.

25. Ligne de fabrication de pâtes alimentaires selon la revendication 9, **caractérisée** en ce qu'il est prévu un guide de pâtes entre la presse et le séchoir, et en ce que le dispositif de coupe coupe les pâtes alimentaires au niveau de ce guide de pâtes.
